(19) Europäisches Patentamt / European Patent Office / Office européen des brevets

(11) **EP 3 121 083 B1**

(12) **EUROPEAN PATENT SPECIFICATION**

(45) Date of publication and mention of the grant of the patent:
**13.03.2019   Bulletin 2019/11**

(51) Int Cl.:
*B60W 30/02* (2012.01)    *B60W 10/02* (2006.01)
*B60W 10/04* (2006.01)    *B60W 10/06* (2006.01)
*F02D 29/02* (2006.01)    *F16D 43/04* (2006.01)
*F16D 43/18* (2006.01)    *B60K 28/16* (2006.01)
*B60W 30/18* (2012.01)

(21) Application number: **15843038.9**

(22) Date of filing: **22.05.2015**

(86) International application number:
**PCT/JP2015/064779**

(87) International publication number:
**WO 2016/042844 (24.03.2016 Gazette 2016/12)**

(54) **DRIVE POWER CONTROL SYSTEM AND VEHICLE EQUIPPED WITH DRIVE POWER CONTROL SYSTEM**

ANTRIEBSKRAFTSTEUERUNGSSYSTEM UND FAHRZEUG MIT DEM ANTRIEBSKRAFTSTEUERUNGSSYSTEM

SYSTÈME DE COMMANDE DE PUISSANCE D'ENTRAÎNEMENT ET VÉHICULE COMPORTANT UN SYSTÈME DE COMMANDE DE PUISSANCE D'ENTRAÎNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **19.09.2014   JP 2014190889**
**27.01.2015   JP 2015013254**

(43) Date of publication of application:
**25.01.2017   Bulletin 2017/04**

(73) Proprietor: **Yamaha Hatsudoki Kabushiki Kaisha Iwata-shi, Shizuoka 438-8501 (JP)**

(72) Inventors:
 • **TAKAHASHI, Goh**
  **Iwata-shi**
  **Shizuoka 438-8501 (JP)**
 • **SASAKI, Nozomu**
  **Iwata-shi**
  **Shizuoka 438-8501 (JP)**
 • **ARAI, Katsuhiro**
  **Iwata-shi**
  **Shizuoka 438-8501 (JP)**
 • **FUJII, Takahiro**
  **Iwata-shi**
  **Shizuoka 438-8501 (JP)**

(74) Representative: **Grünecker Patent- und Rechtsanwälte**
**PartG mbB**
**Leopoldstraße 4**
**80802 München (DE)**

(56) References cited:
**EP-A1- 2 314 896        WO-A1-2006/009014**
**JP-A- S 624 953        JP-A- H04 143 426**
**JP-A- H05 149 158        JP-A- H05 240 076**
**JP-A- 2002 357 141        JP-A- 2006 071 096**
**JP-A- 2011 106 667        JP-A- 2014 034 964**
**US-A1- 2003 045 987        US-A1- 2008 248 919**
**US-A1- 2013 073 157        US-B1- 8 543 301**

**Description**

## TECHNICAL FIELD

The present invention relates to driving force control in a vehicle having a centrifugal clutch mounted therein.

## BACKGROUND ART

Patent Document 1 describes a motorcycle in which a driving force control system is mounted. The driving force control system described in Patent Document 1 is a control system which adjusts slipping of the driving wheel.

## CITATION LIST

## PATENT LITERATURE

[Patent Document 1] Japanese Laid-Open Patent Publication No. 4-143426 US-B-8 543 301 discloses the features of the preamble of claim 1.

## SUMMARY OF INVENTION

## TECHNICAL PROBLEM

If the driving force control described in Patent Document 1 is applied to a vehicle in which a centrifugal clutch is mounted, the rider may feel oddness.

An objective of the present invention is to provide a driving force control system that can reduce oddness to a rider of a vehicle in which a centrifugal clutch is mounted, and a vehicle including the driving force control system.

## SOLUTION TO PROBLEM

A driving force control system according to the present invention is a driving force control system for use in a vehicle, the vehicle including a driving source, a driving wheel to be driven by motive power from the driving source, and a centrifugal clutch provided in a transmission path of motive power between the driving source and the driving wheel, wherein the centrifugal clutch includes an upstream component mechanically connected to the driving source to rotate and a downstream component to be mechanically connected with or disengaged from the upstream component based on a centrifugal force which is in accordance with rotation of the upstream component, and automatically turns ON or OFF, with the centrifugal force which is in accordance with rotation of the upstream component of the centrifugal clutch, transmission of motive power between an upstream-of-centrifugal-clutch path from the driving source to the upstream component and a downstream-of-centrifugal-clutch path from the downstream component to the driving wheel; and the driving force control system controls a driving force of the driving wheel in the downstream-of-centrifugal-clutch path in accordance with a physical parameter concerning rotation of the upstream-of-centrifugal-clutch path, at least when the centrifugal clutch is in a half-clutch state.

Through vigorous studies, the inventors have found the following. A centrifugal clutch includes an upstream component which is mechanically connected with a driving source to rotate, and a downstream component to be mechanically connected with or disengaged from the upstream component based on a centrifugal force occurring in accordance with rotation of the upstream component. Transmission of motive power between an upstream-of-centrifugal-clutch path from the driving source to the upstream component and a downstream-of-centrifugal-clutch path from the downstream component to a driving wheel is automatically turned ON or OFF with a centrifugal force which is in accordance with rotation of the upstream component of the centrifugal clutch. Therefore, in a centrifugal clutch, transmission of motive power between the centrifugal clutch upstream component and the centrifugal clutch downstream component is governed by a centrifugal force which occurs in the centrifugal clutch upstream component with rotation of the upstream-of-centrifugal-clutch path. Thus, the inventors have found that, in a centrifugal clutch, the torque to be transmitted to the downstream-of-centrifugal-clutch path can be known by checking a physical parameter concerning rotation of the upstream-of-centrifugal-clutch path. Even when the centrifugal clutch is in a half-clutch state, by checking the physical parameter concerning rotation of the upstream-of-centrifugal-clutch path, the torque which is transmitted to the downstream-of-centrifugal-clutch path becomes known. The inventors have found that, at least when the centrifugal clutch is in a half-clutch state, it is possible to appropriately adjust slipping of the driving wheel based on the physical parameter concerning rotation of the upstream-of-centrifugal-clutch path.

With the driving force control system according to the present invention, at least when the centrifugal clutch is in a half-clutch state, the driving force of the driving wheel in the downstream-of-centrifugal-clutch path is controlled in accordance with a physical parameter concerning rotation of the upstream-of-centrifugal-clutch path. As a result, it becomes possible to reduce oddness to the rider while allowing the driving force control system of the vehicle to exhibit its functions.

Furthermore, when the centrifugal clutch is in an engaged state, the driving force of the driving wheel in the downstream-of-centrifugal-clutch path may be controlled based on a physical parameter concerning rotation of the downstream-of-centrifugal-clutch path and a physical parameter concerning rotation of a non-driving wheel of the vehicle. As a result, while reducing oddness to the rider, it is possible to perform driving force control for the vehicle in an engaged state of the centrifugal clutch. Moreover, by switching control depending on whether the centrifugal clutch is in a half-clutch state or in an engaged state, appropriate control in each case can be performed, and thus it becomes possible to reduce oddness to the rider while allowing the driving force control system of the vehicle to exhibit its functions.

Furthermore, a state of the centrifugal clutch may be determined based on a relationship between: at least one of a physical parameter concerning rotation of the downstream-of-centrifugal-clutch path and a physical parameter concerning rotation of a non-driving wheel of the vehicle; and the physical parameter concerning rotation of the upstream-of-centrifugal-clutch path. As a result, existing sensors can be used to accurately determine the state of the centrifugal clutch, thereby reducing oddness to the rider of the vehicle in which the centrifugal clutch is mounted.

Furthermore, a state of the centrifugal clutch may be determined based on a relationship between the physical parameter concerning rotation of the upstream-of-centrifugal-clutch path and the physical parameter concerning rotation of the downstream-of-centrifugal-clutch path when a transmission of the vehicle is at a maximum transmission ratio. As a result, existing sensors can be used to accurately determine the state of the centrifugal clutch, thereby reducing oddness to the rider of the vehicle in which the centrifugal clutch is mounted.

Furthermore, the relationship between the physical parameter concerning rotation of the upstream-of-centrifugal-clutch path and the physical parameter concerning rotation of the downstream-of-centrifugal-clutch path when the transmission of the vehicle is at the maximum transmission ratio may be set by estimating a state of the transmission after the vehicle has traveled a predetermined distance. This enables a determination of the centrifugal clutch state that takes into account changes in the state of the transmission that are associated with use of the vehicle, whereby the centrifugal clutch state can be accurately determined, and oddness to the rider of the vehicle in which the centrifugal clutch is mounted is reduced.

Furthermore, at least when the centrifugal clutch is in a half-clutch state, a rotational speed of the driving source may be changed in accordance with the physical parameter concerning rotation of the upstream-of-centrifugal-clutch path. As a result, it becomes possible to reduce oddness to the rider while allowing the driving force control system of the vehicle to exhibit its functions.

Furthermore, when the centrifugal clutch is in an engaged state, an output of the driving source may be changed based on a physical parameter concerning rotation of the downstream-of-centrifugal-clutch path and a physical parameter concerning rotation of a non-driving wheel of the vehicle. As a result, while reducing oddness to the rider, it is possible to perform driving force control for the vehicle in an engaged state of the centrifugal clutch. Moreover, by switching control depending on whether the centrifugal clutch is in a half-clutch state or in an engaged state, appropriate control in each case can be performed, and thus it becomes possible to reduce oddness to the rider while allowing the driving force control system of the vehicle to exhibit its functions.

In line with the invention, at least when the centrifugal clutch is in a half-clutch state, a rotational speed of the driving source may be changed so as to approach a target rotational speed by using the physical parameter concerning rotation of the upstream-of-centrifugal-clutch path. As a result, it becomes possible to reduce oddness to the rider while allowing the driving force control system of the vehicle to exhibit its functions.

Furthermore, the driving force control system may be a system of adjusting a slip of the driving wheel when the driving wheel is slipping; and the target rotational speed may be a rotational speed at which the driving wheel attains a predetermined slip. As a result, it becomes possible to reduce oddness to the rider while allowing the driving force control system of the vehicle to exhibit its functions.

Furthermore, the driving force control system may be a system of adjusting a slip of the driving wheel when the driving wheel is slipping; and the target rotational speed is a rotational speed at which the driving wheel attains gripping. As a result, it becomes possible to reduce oddness to the rider while allowing the driving force control system of the vehicle to exhibit its functions.

Furthermore, the target rotational speed may be set based on relative magnitudes of a physical parameter concerning rotation of the downstream-of-centrifugal-clutch path and a physical parameter concerning rotation of a non-driving wheel of the vehicle. As a result, a target rotational speed can be set which is in accordance with the travel state, thereby making it possible to reduce oddness to the rider while allowing the driving force control system of the vehicle to exhibit its functions.

Furthermore, the driving force control system may be a system for adjusting a slip of the driving wheel when the driving wheel is slipping; and the target rotational speed may be set based on a relationship between the physical parameter concerning rotation of the upstream-of-centrifugal-clutch path and an amount of change in the slip of the driving wheel. As a result, a target rotational speed can be set which is in accordance with the travel state, thereby making it possible to reduce oddness to the rider while allowing the driving force control system of the vehicle to exhibit its functions.

Furthermore, the target rotational speed may be set based on a relationship between the physical parameter concerning rotation of the upstream-of-centrifugal-clutch path and an amount of change in a physical parameter concerning rotation of the downstream-of-centrifugal-clutch path. As a result, a target rotational speed can be set which is in accordance with the travel state, thereby making it possible to reduce oddness to the rider while allowing the driving force control system of the vehicle to exhibit its functions.

Furthermore, the driving force control system may be a system for adjusting a slip of the driving wheel when the driving wheel is slipping; and when the centrifugal clutch is in an engaged state, an output of the driving source may be changed so that the slip of the driving wheel becomes equal to or less than a target slip, based on a physical parameter concerning rotation of the downstream-of-centrifugal-clutch path and a physical parameter concerning rotation of a non-driving wheel of the vehicle. As a result, while reducing oddness to the rider, it is possible to perform driving force control for the vehicle in an engaged state of the centrifugal clutch. Moreover, by switching control depending on whether the centrifugal clutch is in a half-clutch state or in an engaged state, appropriate control in each case can be performed, and thus it becomes possible to reduce oddness to the rider while allowing the driving force control system of the vehicle to exhibit its functions.

Moreover, a vehicle according to the present invention comprises the above driving force control system. As a result, a vehicle is realized which reduces oddness to the rider while allowing the driving force control system of the vehicle to exhibit its functions.

## ADVANTAGEOUS EFFECTS OF INVENTION

With a driving force control system according to the present invention and a vehicle including the driving force control system, it becomes possible to reduce oddness to the rider while allowing the driving force control system of the vehicle to exhibit its functions.

## BRIEF DESCRIPTION OF DRAWINGS

[FIG. 1] A side view showing a scooter-type motorcycle according to an embodiment of the present invention.

[FIG. 2] A schematic diagram showing an engine unit according to an embodiment of the present invention.

[FIG. 3] An exploded view of a continuously variable transmission according to an embodiment of the present invention.

[FIG. 4] A cross-sectional view of the engine unit according to an embodiment of the present invention.

[FIG. 5] A cross-sectional view of a centrifugal clutch according to an embodiment of the present invention.

[FIG. 6] A diagram showing a state of the centrifugal clutch while the engine is stopped, according to an embodiment of the present invention.

[FIG. 7] A diagram showing a state of the centrifugal clutch during travel, according to an embodiment of the present invention.

[FIG. 8] A schematic diagram of the structure of the engine unit according to an embodiment of the present invention.

[FIG. 9] A functional block diagram showing a driving force control system according to an embodiment of the present invention.

[FIG. 10] A diagram showing driving force control according to an embodiment of the present invention.

[FIG. 11] A flowchart illustrating driving force control according to an embodiment of the present invention.

[FIG. 12] A diagram illustrating operations of respective component elements during traction control where slipping of the driving wheel is adjusted in accordance with a slip amount of the driving wheel, according to an embodiment of the present invention.

[FIG. 13] (a) and (d) are diagrams illustrating operations of respective component elements during traction control where slipping of the driving wheel is adjusted in accordance with a slip amount of the driving wheel, according to an embodiment of the present invention.

[FIG. 14] A functional block diagram showing a driving force control system according to an embodiment of the present invention.

[FIG. 15] A diagram showing driving force control according to an embodiment of the present invention.

[FIG. 16] A flowchart illustrating driving force control according to an embodiment of the present invention.

[FIG. 17] A diagram illustrating operations of respective component elements when performing a control of ensuring that the engine rotational speed tracks a target rotational speed, according to an embodiment of the present invention.

[FIG. **18**] **(a)** to **(d)** are diagrams illustrating operations of respective component elements when performing a control of ensuring that the engine rotational speed tracks a target rotational speed, according to an embodiment of the present invention.

[FIG. **19**] A diagram illustrating a method of determining the state of the centrifugal clutch according to an embodiment of the present invention.

[FIG. **20**] **(a)** to **(c)** are diagrams illustrating a method of determining the state of the centrifugal clutch according to an embodiment of the present invention.

[FIG. **21**] A diagram illustrating a method of determining the state of the centrifugal clutch according to an embodiment of the present invention.

[FIG. **22**] A diagram showing a relationship between rotational speeds of a primary sheave, a secondary sheave, and a clutch outer cover when the vehicle undergoes various states, according to an embodiment of the present invention.

[FIG. **23**] A method of setting a Low line according to an embodiment of the present invention.

[FIG. **24**] A diagram illustrating operations of respective component elements when performing the control according to an embodiment of the present invention.

[FIG. **25**] A diagram illustrating operations of respective component elements when performing the control according to an embodiment of the present invention.

[FIG. **26**] **(a)** to **(d)** are diagrams illustrating an operation of determining the state of the centrifugal clutch according to an embodiment of the present invention.

[FIG. **27**] A diagram describing an operation of determining the state of the centrifugal clutch according to an embodiment of the present invention.

[FIG. **28**] A diagram illustrating a method of determining the state of the centrifugal clutch according to an embodiment of the present invention.

[FIG. **29**] A diagram illustrating a method of determining the state of the centrifugal clutch according to an embodiment of the present invention.

[FIG. **30**] **(a)** to **(d)** are diagrams illustrating a method of determining the state of the centrifugal clutch according to an embodiment of the present invention.

[FIG. **31**] A diagram illustrating a method of determining the state of the centrifugal clutch according to an embodiment of the present invention.

[FIG. **32**] A diagram illustrating a clutch model representing the characteristics of a centrifugal clutch according to an embodiment of the present invention.

[FIG. **33**] A diagram describing a method of correcting a target torque according to an embodiment of the present invention.

## DESCRIPTION OF EMBODIMENTS

Hereinafter, with reference to the attached drawings, embodiments of the driving force control system according to the present invention, and straddled vehicles each being one example of a vehicle equipped with the driving force control system, will be described. The present specification will illustrate scooter-type motorcycles as embodiments of straddled vehicles. However, this is only an example. Any motorcycles other than scooter types are also applicable, and 3-wheel motorcycles having three wheels, all-terrain vehicles (ATVs), and the like are also encompassed within straddled vehicles.

In the following description, unless otherwise specified, front, rear, left, and right respectively refer to the front, rear, left, and right as viewed from the rider of the motorcycle. Symbols F, Re, L, and R in the figures respectively represent front, rear, left, and right.

In the description of the embodiments, identical component elements will be denoted by identical reference numerals, and any redundant description thereof will be omitted.

(Embodiment 1)

First, an overall construction of the motorcycle according to the present embodiment will be described.

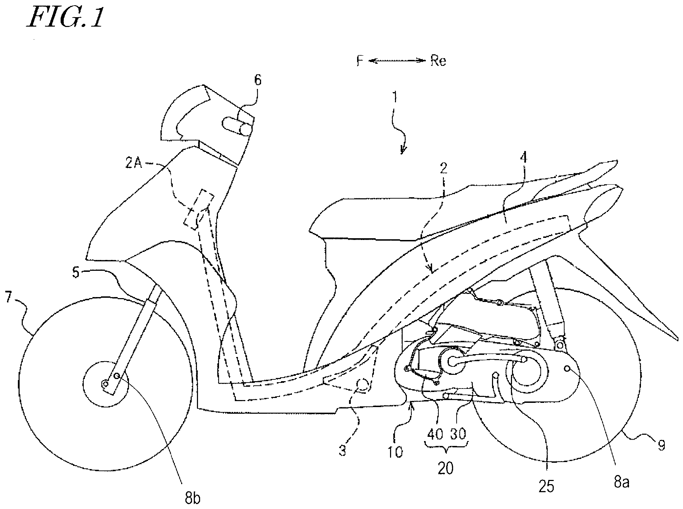

FIG. **1** is a side view showing an outer construction of a scooter-type motorcycle **1** according to the present embodiment.

As shown in FIG. **1,** the motorcycle **1** includes a body frame **2,** a body cover **4,** handle bars **6,** a front wheel **7,** a rear-wheel speed sensor **8a,** a front-wheel speed sensor **8b,** a rear wheel **9,** and an engine unit **10.**

The body cover **4** covers the body frame **2** on the sides. The body frame **2** includes a head pipe **2A.** Front forks **5** are supported by the head pipe **2A.** Handle bars **6** are attached above the front forks **5.** At a lower end of the front forks **5,** a front-wheel speed sensor **8b** is provided, and a front wheel **7** is supported. The front-wheel speed sensor **8b** detects a rotational speed which is the wheel speed of the front wheel **7.** In the present specification, a "rotational speed" means a number of rotations per unit time.

The engine unit **10** is swingingly supported on the body frame **2,** around a pivot axis **3.** At a rear end of the engine unit **10,** a rear-wheel speed sensor **8a** is provided, and a rear wheel **9** is supported. The rear-wheel speed sensor **8a** detects a rotational speed which is the wheel speed of the rear wheel **9.** In this example, the driving wheel is the rear wheel **9,** and the non-driving wheel is the front wheel **7.**

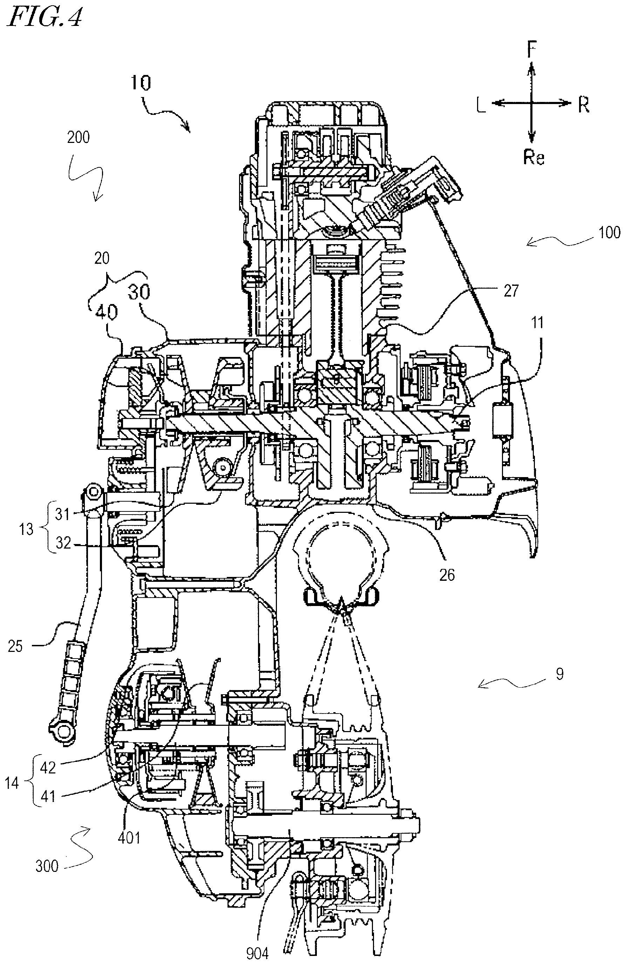

The engine unit **10** includes a transmission case **20.** The transmission case **20** includes a case body **30** which is fixed to a crankcase **26** (FIG. **4**) described below, and a cover **40** which is fixed to the case body **30.** The case body **30** houses a continuously variable transmission (CVT) **200** to be described below. A kick shaft **25** is attached on a side of the transmission case **20.**

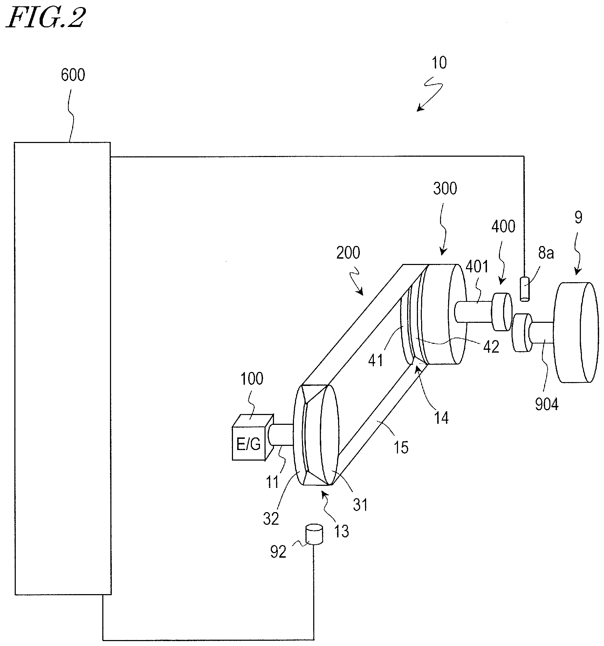

Hereinafter, with reference to FIG. **2,** a detailed construction of the engine unit **10** will be described. Although the present specification illustrates that the engine unit **10** includes the rear wheel **9,** this is an example. While including an engine, the engine unit **10** may additionally include any other elements and mechanisms.

FIG. **2** schematically shows a construction of the engine unit **10.**

The engine unit **10** includes an engine **100,** the continuously variable transmission **200,** a centrifugal clutch **300,** a deceleration gear **400,** and the rear wheel **9;** in this order, a rotary driving force is transmitted from the engine **100** to the driving wheel **9,** which is the driving wheel.

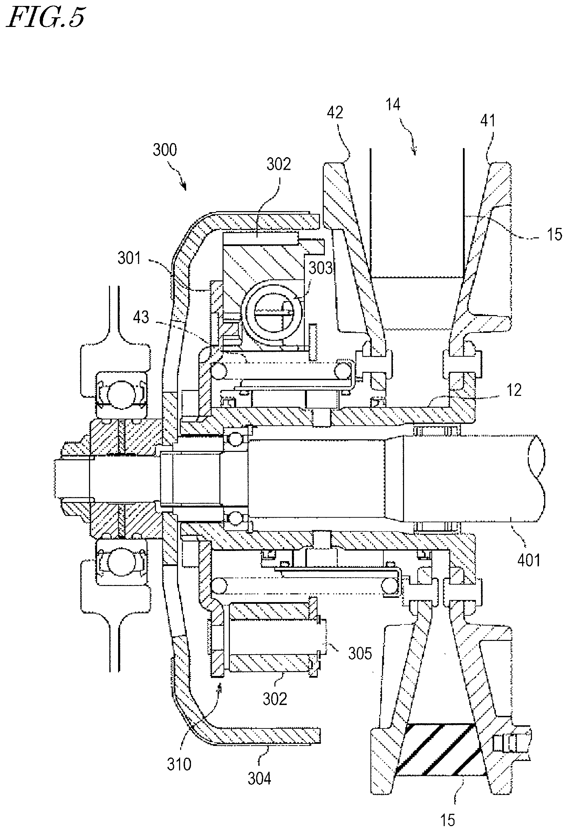

The continuously variable transmission **200** transmits motive power from an output shaft **11** (primary shaft **11**) of the engine **100** to an input shaft of the centrifugal clutch **300.** Generally, the continuously variable transmission **200** includes the primary shaft **11,** a secondary shaft **12** (FIG. **5,** to be described later), a primary sheave **13,** a secondary sheave **14,** and a V belt **15.**

In the present embodiment, the primary shaft **11** is integral with a crank shaft (not shown) of the engine **100.** The secondary shaft **12** is provided in parallel to the primary shaft **11,** and linked to a clutch plate **301** of the centrifugal clutch **300** (FIG. **5**). The secondary shaft **12** is a hollow center axis of the secondary sheave **14,** and defines the input shaft of the centrifugal clutch **300** as shown in FIG. **5** to be described later.

The primary sheave **13** is disposed on the primary shaft **11,** to which output from the engine **100** is transmitted. The secondary sheave **14** is disposed on the input shaft of the centrifugal clutch **300.**

In the present embodiment, the primary sheave **13** and the secondary sheave **14** each include a stationary flange **(31, 41)** and a movable flange **(32, 42),** which are attached to their rotation axis (the primary shaft **11** and the secondary shaft **12**). The stationary flange **(31, 41)** and the movable flange **(32, 42)** define a V groove around which the belt is to be wound. The V belt **15** is wound around the V grooves of the primary sheave **13** and the secondary sheave **14,** and transmits rotary driving force between both sheaves **(13, 14).**

The primary sheave **13** may include roller weights (not shown), for example, such that the movable flange **32** moves with rotation of the primary sheave **13,** thus changing the groove width of the primary sheave **13.** The groove width of the secondary sheave **14** changes so as to be able to sandwich the V belt **15** in accordance with the groove width of the primary sheave **13;** thus, the belt-type continuously variable transmission **200** undergoes changes in its transmission ratio. Since the transmission mechanism in which the primary sheave **13** includes roller weights is known, any detailed description thereof is omitted herein.

The centrifugal clutch **300** is attached between a hollow center axis **12** of the secondary sheave **14** (the input shaft of the centrifugal clutch **300** as shown in FIG. **5** to be described later) and a gear shaft **401** (the output shaft of the centrifugal clutch **300**) which penetrates through the center axis **12.**

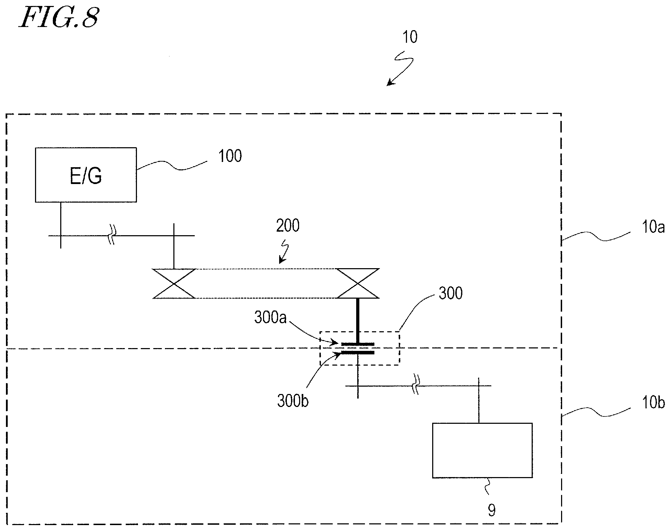

The centrifugal clutch **300,** includes a centrifugal clutch upstream component **300a** (FIG. **8**) which is mechanically connected to the engine **100** and rotates in accordance with rotation of the engine **100.** Moreover, the centrifugal clutch **300** includes a centrifugal clutch downstream component **300b** (FIG. **8**) which is mechanically connected to the rear wheel **9.** Based on the magnitude of a centrifugal force acting on the upstream component **300a** in accordance with rotational speed of the engine **100,** the upstream component **300a** and the downstream component **300b** are mechanically connected with or disengaged from each other, thereby turning ON or OFF the transmission of rotary driving force from the upstream component **300a** to the downstream component **300b.** Details of the centrifugal clutch **300** will be described later with reference to FIG. **5,** FIG. **6,** and FIG. **7.** Details of the upstream component **300a** and the downstream component **300b** will be described later with reference to FIG. **8.**

The engine unit **10** further includes the driving force controller **600.** The driving force controller **600** is also called an electronic control unit (ECU). The electronic control unit (ECU) can be implemented by, for example, an arithmetic circuit (microcomputer (MPU)) and a primary storage device (memory). From a multitude of sensors that are attached to the vehicle, a multitude of vehicle information is input to driving force controller **600.** A system that includes not only the driving force controller **600** but also various sensors, a spark plug(s), a fuel injector(s), and various actuators to be controlled by the driving force controller **600** is referred to as a driving force control system in the present specification. Note that the component elements of the driving force control system other than the driving force controller **600** may be arbitrary, and the kinds and numbers of component element to be included in the driving force control system may differ depending on the embodiment. For example, only the driving force controller **600** may be exclusively referred to as the driving force control system.

Using the vehicle information which is input thereto, the microcomputer of the driving force controller **600** executes various processes to be described later. These processes are implemented by the microcomputer executing a computer program which describes a procedure of processing, for example.

The driving force controller **600** is electrically connected to various sensors to receive signals which are output from the respective sensors, i.e., signals indicating detection results. The detection results from the sensors are utilized as various vehicle information of the motorcycle **1.** Examples of various sensors may include, for example, an engine rotational speed sensor **92** and the wheel speed sensors **8a** and **8b** (FIG. **1**).

The engine rotational speed sensor **92** detects a rotational speed of the engine. In the present embodiment, the engine rotational speed sensor **92** detects a rotational speed of the crank shaft (primary shaft **11**). The rear-wheel speed sensor **8a** detects a rotational speed of the driving axis **904** of the driving wheel **9,** i.e., a rear-wheel speed. The front-wheel speed sensor **8b** (FIG. **1**) detects a front-wheel speed as the vehicle speed of the motorcycle **1.**

Note that the transmission ratio of the continuously variable transmission **200** may be controlled by the driving force controller **600.** For example, based on vehicle information such as vehicle speed and throttle position, the driving force controller **600** may refer to a prestored transmission gear ratio map to change the transmission ratio of the continuously variable transmission **200.** A transmission gear ratio map is a database to be provided in connection with various travel modes during travel, which defines, for example, target transmission ratios of the continuously variable transmission **200** as corresponding to vehicle speeds, engine rotational speeds, and throttle positions. Moreover, in this case, the engine unit **10** may include a groove width adjustment mechanism and a groove width adjustment actuator (not shown). Driven by the groove width adjustment actuator, the groove width adjustment mechanism moves the movable flange **32** of the primary sheave **13** so as to adjust the groove width of the primary sheave **13.** The groove width adjustment actuator is an electric motor, for example. By varying the groove width of the secondary sheave **14** so as to be able to sandwich the V belt **15** in accordance with the groove width of the primary sheave **13,** the belt-type continuously variable transmission **200** changes its transmission ratio.

As sensors to output various vehicle information to the driving force controller **600,** for example, a flange position detection sensor, a throttle position sensor (TPS), and a vehicle speed sensor may be provided. Note that a "throttle position sensor" may be abbreviated as "throttle sensor". A flange position detection sensor detects a position of the movable flange **32.** A throttle sensor detects an accelerator position (throttle position). A vehicle speed sensor detects a rotational speed of the gear shaft **401** (the output shaft of the centrifugal clutch **300**). The driving force controller **600** may further utilize various vehicle information which is output from these sensors to perform various controls.

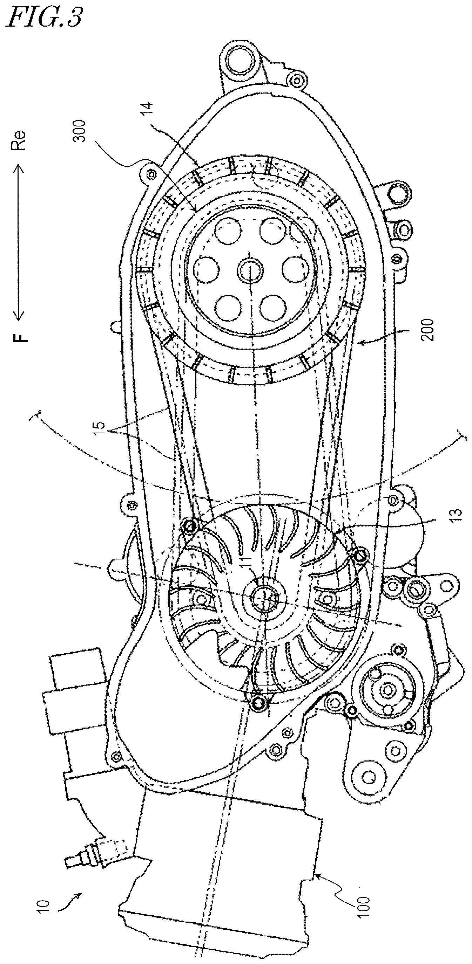

FIG. **3** is an exploded view of the continuously variable transmission **200.** FIG. **3** mainly shows the engine **100,** the continuously variable transmission **200,** and the centrifugal clutch **300.** Their structural relationship will be understood from FIG. **3.**

Next, the structure of the engine unit **10** will be described with reference to FIG. **4,** and thereafter the structure of the centrifugal clutch **300** will be described with reference to FIG. **5.**

FIG. **4** shows a detailed cross section of the engine unit **10.** For ease of understanding, FIG. **4** shows positioning of the engine **100,** the continuously variable transmission **200,** the centrifugal clutch **300,** and the driving wheel **9.**

The engine unit **10** includes the engine **100,** the crankcase **26** housing the crank shaft **11,** the continuously variable transmission **200,** and the transmission case **20** housing the continuously variable transmission **200.** The transmission case **20** is disposed on the left of the crankcase **26.** A cylinder **27** is fixed at the front of the crankcase **26.** Rotary driving force of the crank shaft **11** is transmitted to the rear wheel **9** via the continuously variable transmission **200.**

As has been described in connection with FIG. **2,** the continuously variable transmission **200** includes the primary sheave **13** at the engine **100** side and the secondary sheave **14** at the rear wheel side. FIG. **4** shows relative positioning of the stationary flange **31** and the movable flange **32** composing the primary sheave **13,** and the relative positioning of the stationary flange **41** and the movable flange **42** composing the secondary sheave **14.** In order to avoid complexity, the V belt **15** is omitted from illustration. In FIG. **4,** the front half and the rear half of the primary sheave **13** respectively represent states under different transmission ratios (in other words, states under different belt groove widths). The same is also true of the secondary sheave **14.**

The gear shaft **401** is linked to a rear wheel shaft **904** via the deceleration gear **400** (FIG. **2**).

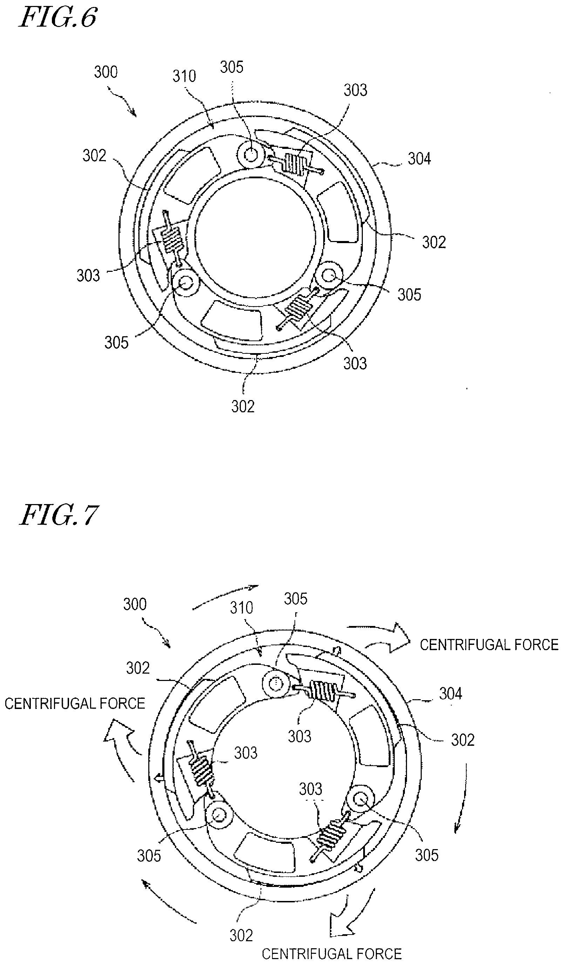

FIG. **5** shows a detailed cross section of the centrifugal clutch **300.** FIG. **6** shows a state of the centrifugal clutch **300** while the engine **100** is stopped, and FIG. 7 shows a state of the centrifugal clutch **300** during travel.

As shown in FIG. **5** to FIG. **7,** the centrifugal clutch **300** includes a clutch plate **301,** clutch shoes **302,** clutch springs **303,** and a clutch housing **304** (clutch outer cover).

As shown in FIG. **5,** the clutch plate **301** is fixedly attached to the center axis **12** of the secondary sheave **14** of the continuously variable transmission **200.** Pins **305** with which to mount the clutch shoes **302** are provided in a manner of protruding from the clutch plate **301.** In the example shown in FIG. **6,** three pins **305** are attached at equal intervals along the circumferential direction. As shown in FIG. **6,** one end of each clutch shoe **302** is attached to a pin **305** that is attached to the clutch plate **301,** so as to permit pivoting. Each clutch spring **303** is mounted so as to link one end of one clutch shoe **302** to another end of a clutch shoe **302** that is adjacent to the one clutch shoe **302** along the circumferential direction. Each clutch spring **303** exhibits an elastic reaction force to pull together one end and the other end of adjacent clutch shoes **302** at all times. The clutch housing **304,** which is a bowl-shaped member, is attached to the gear shaft **401** penetrating through the hollow center axis **12** of the secondary sheave **14,** so as to provide covering over an assembly **310** of the aforementioned clutch shoes **302.**

While the engine **100** is stopped, as shown in FIG. **6,** the assembly **310** of clutch shoes **302** is reduced in diameter as a whole, due to elastic reaction force of the clutch springs **303.** As a result, the clutch shoes **302** and the clutch housing **304** are not in contact.

When the engine **100** is started, the secondary sheave **14** begins to rotate. With a gradual increase in the rotational speed of the secondary sheave **14,** as shown in FIG. 7, the resultant centrifugal force causes the assembly **310** of clutch shoes **302** to defy the elastic reaction force of the clutch springs **303,** whereby the assembly **310** of clutch shoes **302** begins to expand in diameter as a whole. As the secondary sheave **14** consequently reaches a certain rotational speed, the clutch shoes **302** come in contact with the clutch housing **304.** Thereafter, a half-clutch state occurs in which torque is being transmitted while the clutch shoes **302** are slipping against the clutch housing **304,** and then comes a state in which the clutch shoes **302** and the clutch housing **304** are connected due to the frictional force acting between them. As a result, a torque which is in accordance with the frictional force acting between them is transmitted to the gear shaft **401.** The centrifugal clutch **300** as such is disclosed in, for example, Japanese Laid-Open Patent Publication No. 2006-71096.

In the present specification, a state in which the clutch shoes **302** and the clutch housing **304** are not in contact, and thus are not transmitting torque, is referred to as a disengaged state (OFF state) of the clutch. A state in which the clutch shoes **302** and the clutch housing **304** are in contact but are transmitting torque while slipping is referred to as a half-clutch state. A state in which the clutch shoes **302** and the clutch housing **304** are in contact so that both are rotating at the substantially same speed is referred to as an engaged state (ON state) of the clutch; although in actuality the engaged state of the clutch will involve a slight slip, nonetheless they are regarded as rotating at substantially the same rotational speed.

As will be understood from the above explanation, the centrifugal clutch **300** achieves clutch engagement/disengagement through contact/non-contact between the clutch shoes **302** and the clutch housing **304.** On account of this structural role, the centrifugal clutch **300** can be generally classified into an upstream-of-centrifugal-clutch path from the engine **100** to the clutch shoes **302,** through which driving force of the engine **100** is transmitted, and a downstream-of-centrifugal-clutch path from the clutch housing **304** to the rear wheel **9.**

FIG. **8** is a planar and schematic representation of the structure of the engine unit **10.**

As shown in FIG. **8,** the centrifugal clutch **300** can be structurally divided into the centrifugal clutch upstream component **300a** and the centrifugal clutch downstream component **300b.** The upstream component **300a** may be members including the clutch plate **301** and the clutch shoes **302,** for example. The upstream component **300a** is mechanically connected to the engine **100,** and rotates with rotation of the engine **100.** Stated otherwise, the upstream component **300a** is structurally linked with the engine **100,** and rotates with rotation of the engine **100.**

The downstream component **300b** may be members including the clutch housing **304,** for example. The downstream component **300b** is mechanically connected to the rear wheel **9.** Stated otherwise, the downstream component **300b** is structurally linked with the rear wheel **9,** so that the rear wheel **9** rotates with rotation of the downstream component **300b.**

Based on the magnitude of a centrifugal force acting on the upstream component **300a** in accordance with rotational speed of the engine **100,** the upstream component **300a** and the downstream component **300b** are mechanically connected with or disengaged from each other, thereby turning ON or OFF the transmission of rotary driving force from the centrifugal clutch upstream component **300a** to the centrifugal clutch downstream component **300b.** Stated otherwise, depending on the magnitude of the centrifugal force, the upstream component **300a** and the downstream component **300b** may come in contact and become engaged, or disengaged, thereby turning ON or OFF the transmission of rotary driving force.

In the present specification, a path including the engine **100,** the continuously variable transmission **200,** the centrifugal clutch upstream component **300a,** and any driving force transmitting mechanism that provides mechanical connection therebetween, will be referred to as the upstream-of-centrifugal-clutch path **10a.** The component elements of the upstream-of-centrifugal-clutch path **10a** rotate in an integral manner with the engine **100.**

Moreover, a path including the centrifugal clutch downstream component **300b,** the rear wheel **9,** and any driving force transmitting mechanism that provides mechanical connection therebetween, will be referred to as the downstream-of-centrifugal-clutch path **10b.** The downstream-of-centrifugal-clutch path **10b** allows the rotary driving force which is transmitted from the engine **100** to be transmitted to the rear wheel **9,** thereby driving the motorcycle **1.** The component elements of the downstream-of-centrifugal-clutch path **10b** may rotate in an integral manner with the engine **100,** or rotate or stop independently from the engine **100.**

Note that the driving force transmitting mechanism as mentioned above may include one or more gears and one or more rotation axes, for example.

The driving force controller **600** (FIG. **2**) receives an output signal from a first sensor which detects the rotational speed of the upstream-of-centrifugal-clutch path **10a** and an output signal from a second sensor which detects the rotational speed of the downstream-of-centrifugal-clutch path **10b,** and performs traction control on their basis, thereby controlling the driving force to be supplied to the rear wheel **9.**

The first sensor is, for example, a sensor that detects the rotational speed of the engine **100** as a rotational speed of the upstream-of-centrifugal-clutch path **10a.** However, this is an example; the first sensor may be able to detect a rotational speed of any element of the upstream-of-centrifugal-clutch path **10a.** For instance, the first sensor may detect the rotational speed of at least one of the primary shaft **11,** the primary sheave **13,** the secondary sheave **14,** and the centrifugal clutch upstream component **300a** of the centrifugal clutch **300.**

The second sensor is, for example, a sensor that detects the rear-wheel rotational speed as a rotational speed of the downstream-of-centrifugal-clutch path **10b.** However, the second sensor may be able to detect a rotational speed of any element of the downstream-of-centrifugal-clutch path **10b.** For example, the second sensor may detect the rotational speed of at least one of the centrifugal clutch downstream component **300b** of the centrifugal clutch **300** and the gear shaft **401.**

The present specification illustrates the shoe-type centrifugal clutch **300** with clutch shoes as an example. However, the centrifugal clutch is not limited to a shoe-type. For example, a multi-plate clutch of a centrifugal type is also an example of a centrifugal clutch.

A multi-plate clutch of a centrifugal type relies on the engine rotational speed to automatically realize engagement/disengagement of the multi-plate clutch.

A multi-plate clutch of a centrifugal type includes a plurality of drive plates that rotate together with the crank shaft, to which engine rotation is transmitted. A plurality of pressure plates are provided at positions opposing the drive plates along the axial direction. Furthermore, a multi-plate clutch of a centrifugal type includes a clutch weight(s) which moves in the centrifugal direction depending on the engine rotational speed to achieve engagement/disengagement between the drive plates and the pressure plates. Separation between the drive plates and the pressure plates corresponds to a state of so-called clutch disengagement. When the engine rotational speed exceeds a predetermined velocity, the clutch weight(s) moves in the centrifugal direction, whereby the drive plates and the pressure plates come closer together. This allows the rotation of the drive plates to be transmitted to the pressure plates, thus resulting in a state of so-called clutch engagement. As a result of this, driving force of the engine **100** is transmitted to the driving wheel **9.**

The construction of a multi-plate clutch of a centrifugal type can also be divided into a centrifugal clutch upstream component **300a** and a centrifugal clutch downstream component **300b** as shown in FIG. **8.** Specifically, the drive plates would belong in the centrifugal clutch upstream component **300a.** On the other hand, the pressure plates would belong in the centrifugal clutch downstream component **300b.** Thus, in the case of adopting a multi-plate clutch of a centrifugal type, a driving system including the engine **100,** the continuously variable transmission **200,** the centrifugal clutch upstream component **300a,** and any driving force transmitting mechanism that provides mechanical connection therebetween would define the upstream-of-centrifugal-clutch path **10a.** Similarly, a driving system including the centrifugal clutch downstream component **300b,** the rear wheel **9,** and any driving force transmitting mechanism that provides mechanical connection therebetween would define the downstream-of-centrifugal-clutch path **10b.**

Now, the characteristic manner of operation of a centrifugal clutch will be described. A centrifugal clutch is structurally characterized in that it automatically connects or disconnects a transmission path of motive power, depending on the travel state (e.g., the state of engine rotation) of the vehicle.

Based on the magnitude of the centrifugal force in accordance with the engine rotational speed, a centrifugal clutch automatically turns ON or OFF transmission of motive power between the upstream-of-centrifugal-clutch path and the downstream-of-centrifugal-clutch path. The rider (driver) of the vehicle cannot arbitrarily connect or disconnect the transmission path of motive power by manipulating the centrifugal clutch. This characteristic does not belong to any clutch which connects or disconnects the transmission path of motive power in accordance with the rider's manipulation of the clutch lever.

The inventors have vigorously studied the operation of a vehicle which incorporates a centrifugal clutch and a driving force control system. As a result of the study, it was found that situations may arise where traction control which intervenes to adjust slipping of the driving wheel affects the centrifugal force that is in accordance with engine rotation, thereby automatically disengaging the centrifugal clutch. What should be noted here is the fact that disengagement of the centrifugal clutch is automatically achieved in accordance with the magnitude of the centrifugal force, and not by the rider's will. Also note that it is not a matter of the rider's will whether traction control is to intervene or not.

The inventors have found out that, due to complex relationship between the centrifugal clutch and the driving force control system operating irrespective of the rider's will, the rider experiences a feeling of oddness concerning the vehicle behavior. As used herein, "oddness" means an oddness that is felt by a rider of a vehicle which goes through different behavior from the behavior that is intended by the rider. In order to reduce oddness to the rider, it is desirable to perform driving force control in a manner of accounting for the aforementioned characteristic of a centrifugal clutch.

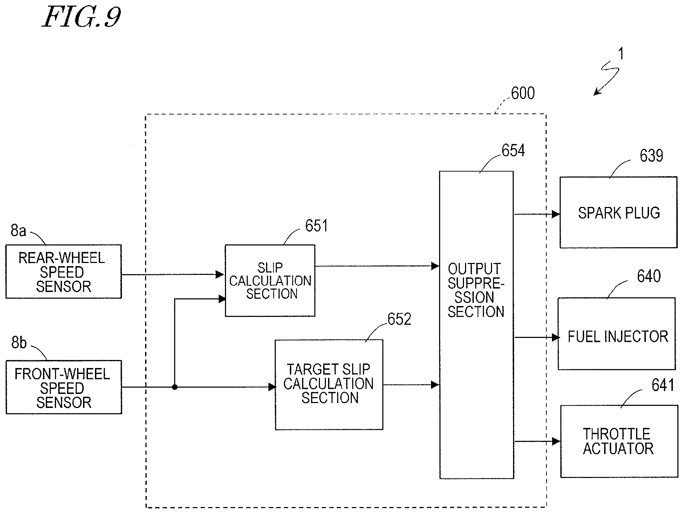

FIG. **9** is a diagram showing an example of the driving force controller **600**. Under this exemplary traction control, a slip amount of the rear wheel **9** (rotational speed of the rear wheel **9** - rotational speed of the front wheel **7**) is computed, and also a target slip amount that serves as a threshold above which driving force suppression control is to begin is computed, and the start and end of traction control are determined based on these. Instead of the slip amount and the target slip amount, a slip rate ((rotational speed of the rear wheel **9** - rotational speed of the front wheel **7**) / rotational speed of the rear wheel **9**) and a target slip rate may be used.

The driving force controller **600** includes a slip calculation section **651,** a target slip calculation section **652,** and an output suppression section **654.** The functions of these component elements are realized as the microcomputer reads a computer program which is stored in a memory and executes it, for example. In addition to such construction, the driving force controller **600** may also have the functions of controlling various parts of the motorcycle **1.** Moreover, at least some of the aforementioned component elements of the driving force controller **600** may be part of a control unit or the like that is separate from the driving force controller **600.**

The front-wheel speed sensor **8b** detects a rotational speed of the front wheel **7,** and outputs it to the slip calculation section **651** and the target slip calculation section **652.** The rear-wheel speed sensor **8a** detects a rotational speed of the rear wheel **9,** and outputs it to the slip calculation section **651.**

Based on a speed difference between the front and rear wheels, the slip calculation section **651** computes a current slip amount of the rear wheel **9.** Based on the rotational speed of the front wheel **7,** the target slip calculation section **652** computes a target slip amount that serves as a threshold for turning traction control ON or OFF.

The output suppression section **654** compares the current slip amount of the rear wheel **9** against the target slip amount serving as a threshold, and if the current slip amount of the rear wheel **9** is equal to or greater than the target slip amount, begins traction control. At this time, the greater the slip amount of the rear wheel **9** is, the greater the amount of suppression in driving force may be. For example, if the current slip amount of the rear wheel **9** is far above the target slip amount, the amount of suppression is made large. If the current slip amount of the rear wheel **9** is less than the target slip amount, traction control is not performed.

In performing traction control, the output suppression section **654** may control the amount of suppression in driving force by controlling the amount of ignition retard of the spark plug **639,** for example. Alternatively, it may control the amount of suppression in driving force by controlling the injected amount of the fuel injector **640,** for example. Alternatively, it may control the amount of suppression in driving force by controlling the throttle position of the throttle actuator **641,** for example. Alternatively, it may control the amount of suppression in driving force by using the brake on the rear wheel **9,** for example. By controlling at least one of the spark plug **639,** the fuel injector **640,** the throttle actuator **641,** and the brake on the rear wheel **9,** the amount of suppression in driving force can be controlled.

Note that the construction of the driving force controller **600** shown in FIG. **9** is an example, and not limiting. For example, control may be performed based on the bank angle. For example, the motorcycle **1** may include an acceleration sensor and a gyroscope to detect an acceleration and an angular velocity of the motorcycle **1,** and detect a bank angle of the motorcycle **1** on their basis. Known methods can be used as the method for determining a bank angle from acceleration and/or angular velocity. So long as the bank angle is determined, any parameter other than acceleration and angular velocity may be used in the calculation. The slip calculation section **651,** the target slip calculation section **652,** and the output suppression section **654** may adapt their computation and control to the detected bank angle. For example, when the bank angle is large, the tolerable slip amount is small; therefore, the slip amount serving as a threshold may be set low to ensure that traction control is more likely to be executed. When the bank angle is small, the tolerable slip amount is large; therefore, the slip amount serving as a threshold may be set high to ensure that traction control is less likely to be executed. Moreover, the slip amount to serve as a threshold may be set in accordance with the accelerator position.

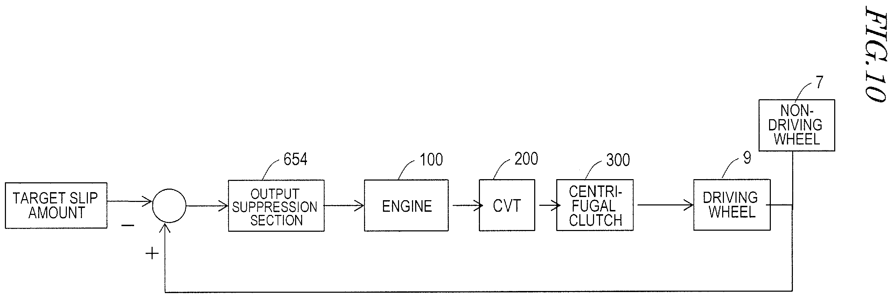

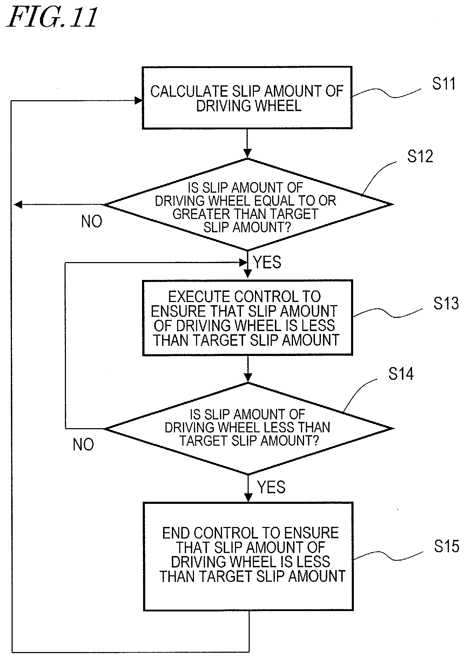

FIG. **10** is a diagram showing an exemplary operation of the driving force control according to the present embodiment. FIG. **11** is a flowchart illustrating this driving force control operation.

In this example, based on a physical parameter concerning rotation of the downstream-of-centrifugal-clutch path **10b** and a physical parameter concerning rotation of the non-driving wheel (front wheel) **7,** slipping of the driving wheel (rear wheel) **9** is adjusted. As used herein, the "physical parameter" may be a rotational speed (number of rotations per unit time) or torque. For example, output from the engine **100** is altered based on the rotational speed of the driving wheel **9,** which is included in the downstream-of-centrifugal-clutch path **10b,** and on the rotational speed of the non-driving wheel **7.** Note that the physical parameter concerning rotation of the downstream-of-centrifugal-clutch path **10b** is not limited to the rotational speed of the driving wheel **9,** but the rotational speed of any component element that is included in the downstream-of-centrifugal-clutch path **10b** may be used. As the physical parameter concerning rotation of the downstream-of-centrifugal-clutch path **10b,** torque may be used instead of rotational speed.

The slip calculation section **651** (FIG. **9**) calculates a current slip amount of the driving wheel **9** from the rotational speeds of the non-driving wheel **7** and the driving wheel **9** (step **S11**).

The output suppression section **654** compares the current slip amount of the driving wheel **9** against the target slip amount serving as a threshold (step **S12**). If the current slip amount of the driving wheel **9** is less than the target slip amount, traction control is not performed. If the current slip amount of the driving wheel **9** is equal to or greater than the target slip amount, traction control is begun. During traction control, output from the engine **100** is suppressed so that the slip amount of the driving wheel **9** becomes less than the target slip amount (step **S13**). As a method of suppressing the output from the engine **100,** as mentioned earlier, output can be suppressed by controlling at least one of the spark plug **639,** the fuel injector **640,** the throttle actuator **641,** and the brake on the driving wheel **9.** Alternatively, this traction control of step **S13** may performed so that, when the current slip amount of the driving wheel **9** is greater than the target slip amount, control of suppressing the output from the engine **100** is performed to ensure that the slip amount of the driving wheel **9** equals the target slip amount.

Against the target slip amount, the output suppression section **654** compares the slip amount of the driving wheel **9** after traction control is begun (step **S14**). If the slip amount of the driving wheel **9** is equal to or greater than the target slip amount, the traction control of step **S13** is continued. Thus, feedback control for the slip amount of the driving wheel **9** is performed so that the slip amount of the driving wheel **9** becomes less than the target slip amount. When the slip amount of the driving wheel **9** becomes less than the target slip amount, traction control is ended (step **S15**), and control returns to the operation of step **S11**. Thus, by monitoring the slip amount of the driving wheel **9** and performing traction control if the slip amount of the driving wheel **9** is equal to or greater than the target slip amount, it is possible to suppress excessive slipping of the driving wheel **9.**

Through the above-described traction control, slipping of the driving wheel **9** can be adjusted. However, it has been found through vigorous studies of the inventors that, in a vehicle in which a centrifugal clutch is mounted, this traction control is a cause of a feeling of oddness to the rider concerning vehicle behavior.

The centrifugal clutch **300** includes the upstream component **300a** (FIG. **8**), which is mechanically connected to the engine **100,** and the downstream component **300b,** which transmits driving force to the driving wheel **9,** such that the upstream component **300a** and the downstream component **300b** become mechanically connected or disengaged based on a centrifugal force. Therefore, in a vehicle **1** including the centrifugal clutch **300,** when traction control is performed to adjust slipping of the driving wheel **9** in accordance with the slip amount of the driving wheel **9,** repetitive operations of "slip"→"centrifugal clutch is disengaged"→"centrifugal clutch is engaged"→"slip" occur, which cause a feeling of oddness to the rider. Such oddness is especially likely to be felt when launching the vehicle.

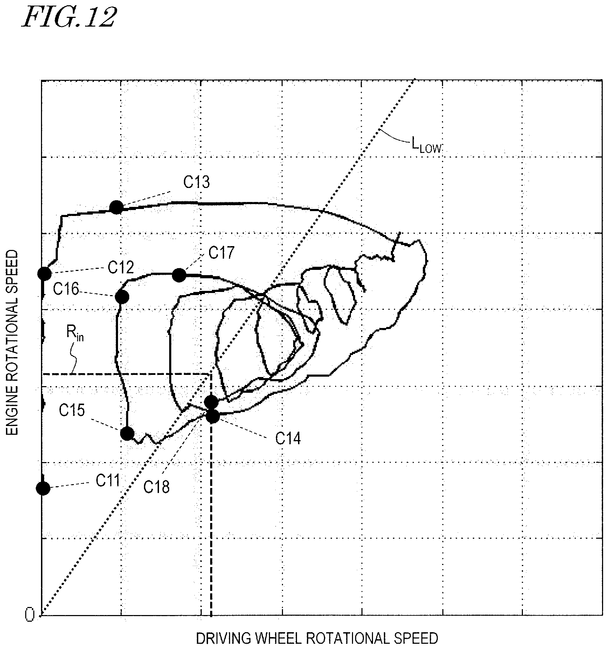

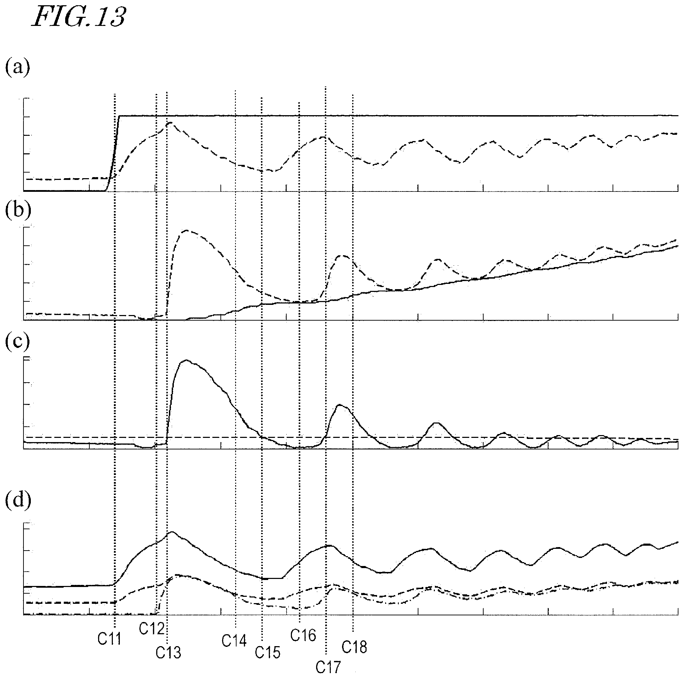

Vehicle behavior which is associated with such traction control to adjust slipping of the driving wheel **9** in accordance with the slip amount of the driving wheel **9** will be described with reference to FIG. **12** and FIG. **13**.

FIG. **12** and FIG. **13** are diagrams illustrating operations of respective component elements during traction control to adjust slipping of the driving wheel **9** in accordance with the slip amount of the driving wheel **9**. This exemplary operation is an operation to take place when the rider activates the accelerator from an idling state of the engine **100** for a launch.

In FIG. **12,** the vertical axis represents rotational speed of the engine **100,** and the horizontal axis represents rotational speed of the driving wheel **9.** In FIG. **12,** a Low line **L$_{LOW}$** represents a relationship between rotational speed of the engine **100** and rotational speed of the driving wheel **9** when the transmission ratio of the continuously variable transmission **200** is at the maximum transmission ratio (Low). A clutch-in rotational speed **R$_{in}$** represents a rotational speed which defines a border between contact and disengagement of the centrifugal clutch upstream component **300a** and the centrifugal clutch downstream component **300b.**

In FIG. **13(a),** a solid line represents the accelerator position, and a broken line represents rotational speed of the engine **100.** In FIG. **13(b),** a solid line represents rotational speed of the non-driving wheel **7,** and a broken line represents rotational speed of the driving wheel **9.** In FIG. **13(c),** a solid line represents the slip amount of the driving wheel **9,** and a broken line represents the target slip amount. In FIG. **13(d),** a solid line represents rotational speed of the primary sheave **13,** a broken line represents rotational speed of the secondary sheave **14,** and a dot-dash line represents rotational speed of the clutch outer cover (clutch housing) **304**. In this example, in order to clearly monitor the clutch state of the test vehicle, rotational speeds are detected by providing sensors for the primary sheave **13,** the secondary sheave **14,** and the clutch outer cover **304**. However, driving force control is possible without utilizing these rotational speeds in the driving force control according to the present embodiment; therefore, these sensors are omissible.

With reference to FIG. **12** and FIG. **13,** a state **C11** represents a state where the rider has activated the accelerator and the rotational speed of the engine **100** has begun to increase. At this point, the centrifugal clutch **300** is in a disengaged state. As the rotational speed of the engine **100** increases, the centrifugal clutch upstream component **300a** and the centrifugal clutch downstream component **300b** come into contact due to a centrifugal force which is in accordance with the rotation of the centrifugal clutch upstream component **300a,** so that torque is transmitted while the upstream component **300a** and the downstream component **300b** slip against each other (a half-clutch state). In a state **C12,** the rotational speed of the driving wheel **9,** to which torque is transmitted from the downstream component **300b,** begins to increase. As rotational speed of the engine **100** increases, the centrifugal force increases, thus increasing the transmitted torque.

As the torque which is transmitted from the downstream component **300b** to the driving wheel **9** increases, the slip amount of the driving wheel **9** keeps increasing. In a state **C13,** the slip amount of the driving wheel **9** becomes equal to or greater than the target slip amount, whereby traction control is begun. Now that traction control is begun, the rotational speed of the engine **100** decreases, but a lag occurs, during which time the centrifugal clutch **300** becomes engaged. After the slip amount of the driving wheel **9** keeps increasing for a while, it then begins to decrease.

With a decrease in rotational speed of the engine **100** and the driving wheel **9,** the upstream component **300a** and the downstream component **300b** are disengaged in a state **C14.** Thereafter, the slip amount of the driving wheel **9** becomes less than the target slip amount until, in a state **C15,** traction control is ended and the rotational speed of the engine **100** begins to increase. At this point, since the upstream component **300a** and the downstream component **300b** are disengaged, the rotational speed of the engine **100** drastically increases, so that the centrifugal clutch upstream component **300a** and the centrifugal clutch downstream component **300b** come into contact, thus entering a half-clutch state. Since the increase in the rotational speed of the engine **100** is drastic, the transmitted torque increases drastically. In a state **C16,** the rotational speed of the driving wheel **9,** to which torque is transmitted from the downstream component **300b,** begins to increase. In a state **C17,** the slip amount of the driving wheel **9** becomes equal to or greater than the target slip amount, so that traction control is again begun; however, the clutch becomes engaged before the rotational speed of the engine **100** decreases. Then, with a decrease in rotational speed of the engine **100** and the driving wheel **9,** the upstream component **300a** and the downstream component **300b** are disengaged in a state **C18.** Thus, when traction control to adjust slipping of the driving wheel **9** in accordance with the slip amount of the driving wheel **9** is performed in the vehicle **1** including the centrifugal clutch **300,** repetitive operations of "slip"→"centrifugal clutch is disengaged"→"centrifugal clutch is engaged"→"slip" occur, thus causing a feeling of oddness to the rider.

The inventors conducted vigorous studies to find that, in the centrifugal clutch **300,** the torque which is transmitted to the downstream-of-centrifugal-clutch path **10b** is known by checking a physical parameter concerning rotation of the upstream-of-centrifugal-clutch path **10a.** Even when the centrifugal clutch **300** is in a half-clutch state, the torque which is transmitted to the downstream-of-centrifugal-clutch path **10b** is known by checking a physical parameter concerning rotation of the upstream-of-centrifugal-clutch path **10a.** The inventors have found that, at least when the centrifugal clutch **300** is in a half-clutch state while the driving wheel **9** is slipping, slipping of the driving wheel **9** can be appropriately adjusted in accordance with a physical parameter concerning rotation of the upstream-of-centrifugal-clutch path **10a.** For example, in the centrifugal clutch **300,** in which rotational speed and transmitted torque can be determined in a one-to-one relationship, controlling rotational speed of the engine **100** can be considered as equivalent to controlling transmitted torque. Moreover, by stabilizing rotational speed of the engine **100,** the aforementioned unstable operation of repetitive clutch engagement/disengagement can be avoided. As a result, a driving force control system is realized which is suitable for a vehicle including a centrifugal clutch, the driving force control system being able to reduce oddness to the rider.

Such a driving force control system which is suitable for a vehicle including a centrifugal clutch, the driving force control system being able to reduce oddness to the rider, will be described.

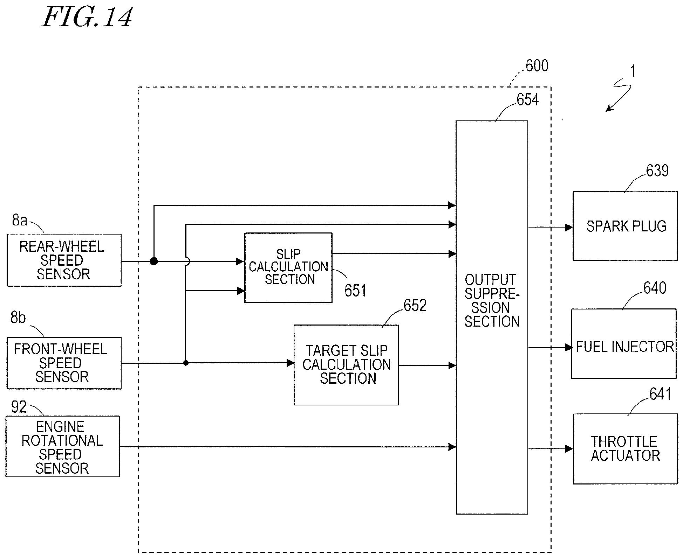

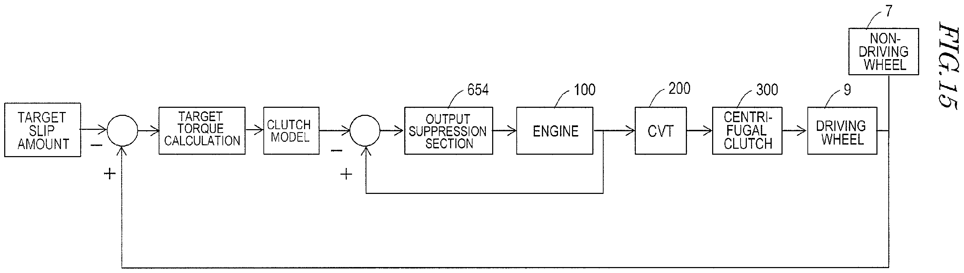

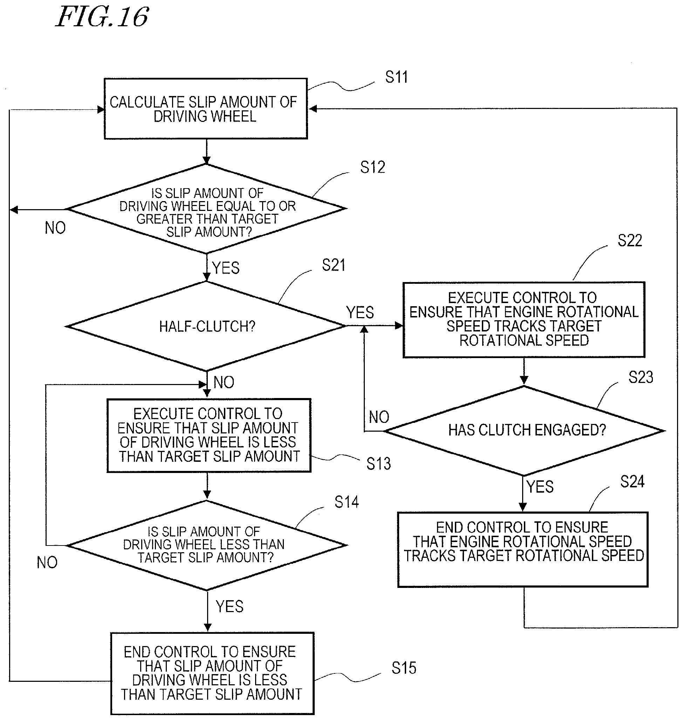

FIG. **14** is a diagram showing an example of the driving force controller **600.** In the driving force controller **600** of FIG. **14,** as opposed to the driving force controller **600** of FIG. **9,** rotational speeds of the driving wheel (rear wheel) **9** and the non-driving wheel (front wheel) **7** as detected by the rear-wheel speed sensor **8a** and the front-wheel speed sensor **8b** are input to the output suppression section **654.** Moreover, a rotational speed of the engine **100** as detected by the engine rotational speed sensor **92** is input to the output suppression section **654.** FIG. **15** is a diagram illustrating an exemplary operation of the driving force control according to the present embodiment. FIG. **16 is** a flowchart illustrating the driving force control operation according to the present embodiment. In this example, at least when the centrifugal clutch **300** is in a half-clutch state while the driving wheel **9** is slipping, slipping of the driving wheel (rear wheel) **9** is adjusted based on a physical parameter concerning rotation of the upstream-of-centrifugal-clutch path **10a.**

In this example, rotational speed of the engine **100** is utilized as an exemplary physical parameter concerning rotation of the upstream-of-centrifugal-clutch path **10a.** The physical parameter concerning rotation of the upstream-of-centrifugal-clutch path **10a** is not limited to rotational speed of the engine **100,** but the rotational speed of any component element that is included in the upstream-of-centrifugal-clutch path **10a** may be used. As the physical parameter concerning rotation of the upstream-of-centrifugal-clutch path **10a,** torque may be used instead of rotational speed.

The operations of steps **S11, S12, S13, S14,** and **S15** in FIG. **16** are similar to the operations of steps **S11, S12, S13, S14,** and **S15** in FIG. **11.** In the processing of FIG. **16,** if step **S12** finds that the current slip amount of the driving wheel **9** is equal to or greater than the target slip amount, control proceeds to the process of step **S21.** At step **S21,** the output suppression section **654** determines whether the centrifugal clutch **300** is in a half-clutch state or not. The method of determining the state of the centrifugal clutch **300** will be described later. If it is determined that the centrifugal clutch **300** is not in a half-clutch state, control proceeds to the process of step **S13.** At step **S13,** the slip amount of the driving wheel **9** is monitored, and output from the engine **100** is suppressed so that the slip amount of the driving wheel **9** becomes less than the target slip amount.

If it is determined at step **S21** that the centrifugal clutch **300** is in a half-clutch state, control proceeds to the process of step **S22.** At step **S22,** the output suppression section **654** monitors the rotational speed of the engine **100,** and performs feedback control for the rotational speed of the engine **100** so that the rotational speed of the engine **100** approaches the target rotational speed. In other words, control is performed to ensure that the rotational speed of the engine **100** tracks the target rotational speed. Herein, the target rotational speed is a rotational speed of the engine **100** at which the driving wheel **9** attains a predetermined slip. For example, it is a rotational speed of the engine **100** at which the slip amount of the driving wheel **9** is equal to or less than a predetermined value. Alternatively, for example, the target rotational speed is a rotational speed of the engine **100** at which the slip amount of the driving wheel **9** is within a range where gripping is attained. The method of determining the target rotational speed will be described later.

At step **S23,** the output suppression section **654** determines whether the centrifugal clutch **300** has engaged or not. If it is determined that the centrifugal clutch **300** is not engaged (in a half-clutch state), the process of the step **S22** is continued. If it is determined that the centrifugal clutch **300** has engaged, the control to ensure that the rotational speed of the engine **100** tracks the target rotational speed is ended (step **S24**), and control returns to the process of step **S11.** In a state where the centrifugal clutch **300** is engaged, the processes from steps **S11** to **S15** are executed.

Thus, at least when the centrifugal clutch **300** is in a half-clutch state while the driving wheel **9** is slipping, slipping of the driving wheel **9** is adjusted in accordance with a physical parameter concerning rotation of the upstream-of-centrifugal-clutch path **10a,** whereby oddness to the rider is reduced.

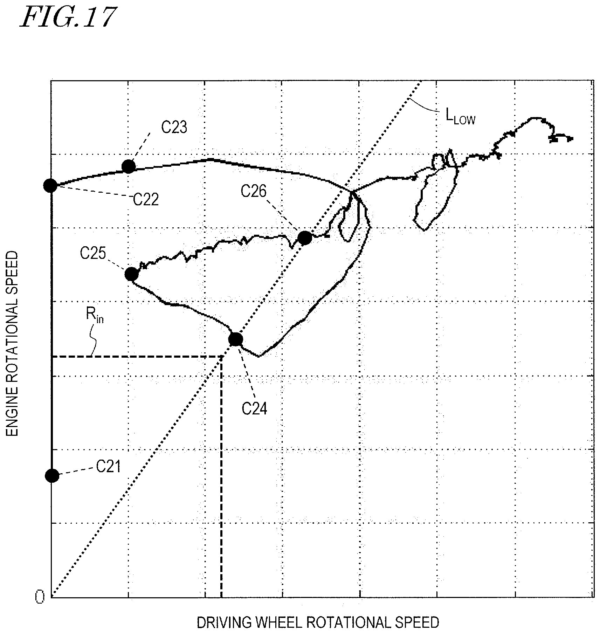

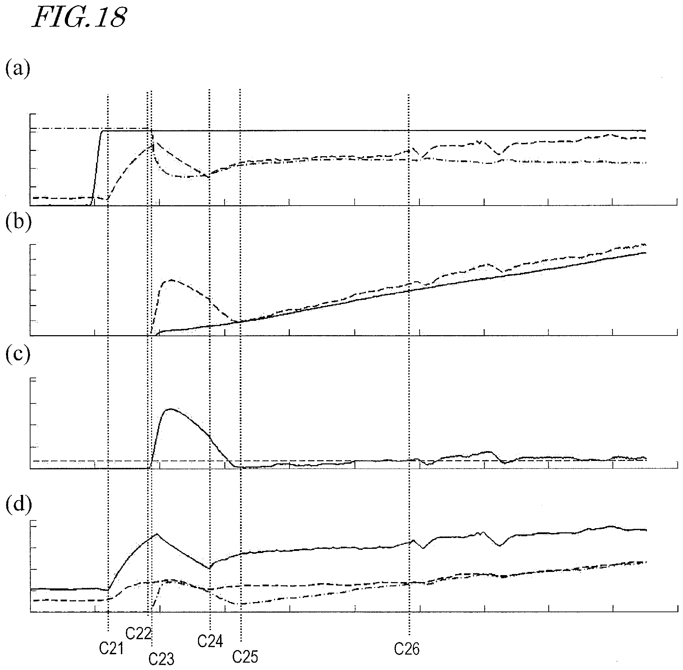

FIG. **17** and FIG. **18** are diagrams illustrating operations of respective component elements when the aforementioned control to ensure that the rotational speed of the engine **100** tracks the target rotational speed is performed. This exemplary operation is an operation where, from an idling state of the engine **100,** the rider activates the accelerator for a launch.

In FIG. **17,** the vertical axis represents rotational speed of the engine **100,** and the horizontal axis represents rotational speed of the driving wheel **9.** In FIG. **18(a),** a solid line represents the accelerator position, a broken line represents rotational speed of the engine **100,** and a dot-dash line represents target rotational speed of the engine **100.** In FIG. **18(b),** a solid line represents rotational speed of the non-driving wheel **7,** and a broken line represents rotational speed of the driving wheel **9.** In FIG. **18(c),** a solid line represents the slip amount of the driving wheel **9,** and a broken line represents the target slip amount. In FIG. **18(d),** a solid line represents rotational speed of the primary sheave **13,** a broken line represents rotational speed of the secondary sheave **14,** and a dot-dash line represents rotational speed of the clutch outer cover (clutch housing) **304.** Similarly to the above, in order to clearly monitor the clutch state of the test vehicle, rotational speeds are detected by providing sensors for the primary sheave **13,** the secondary sheave **14,** and the clutch outer cover **304.** However, driving force control is possible without utilizing these rotational speeds in the driving force control according to the present embodiment; therefore, these sensors are omissible.

With reference to FIG. **17** and FIG. **18,** a state **C21** represents a state where the rider has activated the accelerator and the rotational speed of the engine **100** has begun to increase. At this point, the centrifugal clutch **300** is disengaged. As the rotational speed of the engine **100** increases, the centrifugal clutch upstream component **300a** and the centrifugal clutch downstream component **300b** come into contact due to a centrifugal force which is in accordance with the rotation of the centrifugal clutch upstream component **300a,** so that torque is transmitted in a half-clutch state. In a state **C22,** the rotational speed of the driving wheel **9,** to which torque is transmitted from the downstream component **300b,** begins to increase. As the number of revolutions of the engine **100** increases, the centrifugal force increases, thus increasing the transmitted torque.

As the torque which is transmitted from the downstream component **300b** to the driving wheel **9** increases, the slip amount of the driving wheel **9** keeps increasing. When the slip amount of the driving wheel **9** becomes equal to or greater than the target slip amount, control is begun in a state **C23** to ensure that the rotational speed of the engine **100** tracks the target rotational speed. Now that control is begun to ensure that the rotational speed of the engine **100** tracks the target rotational speed, the rotational speed of the engine **100** decreases, but a lag occurs, during which time the clutch **300** becomes engaged. After the slip amount of the driving wheel **9** keeps increasing for a while, it then begins to decrease.

With a decrease in rotational speed of the engine **100** and the driving wheel **9,** the upstream component **300a** and the downstream component **300b** begin to leave each other in a state **C24,** thus entering a half-clutch state. Through control to ensure that the rotational speed of the engine **100** tracks the target rotational speed, in a state **C25,** while the slip amount of the driving wheel **9** maintains a value at which gripping is attained (i.e., a value which is equal to or less than the target slip amount), the number of rotations of the driving wheel **9** begins to increase, whereby the vehicle **1** keeps accelerating. In a state **C26,** the centrifugal clutch **300** engages, and the control to ensure that the rotational speed of the engine **100** tracks the target rotational speed is ended. After the centrifugal clutch **300** has engaged, the processes from steps **S11** to **S15** are executed.

Thus, at least when the centrifugal clutch **300** is in a half-clutch state while the driving wheel **9** is slipping, slipping of the driving wheel (rear wheel) **9** is adjusted based on a physical parameter concerning rotation of the upstream-of-centrifugal-clutch path **10a,** whereby oddness to the rider is reduced. That is, the aforementioned repetitive operations of "slip"→"centrifugal clutch is disengaged"→"centrifugal clutch is engaged"→"slip" are prevented, whereby oddness to the rider is reduced.

In the above processing, if it is determined that the centrifugal clutch **300** has engaged, the control to ensure that the rotational speed of the engine **100** tracks the target rotational speed is ended; instead, the control to ensure that the rotational speed of the engine **100** tracks the target rotational speed may be continued even after engagement of the centrifugal clutch **300**. Such control also attains appropriate control of driving force.

Next, a method of determining the state of the centrifugal clutch **300** will be described.

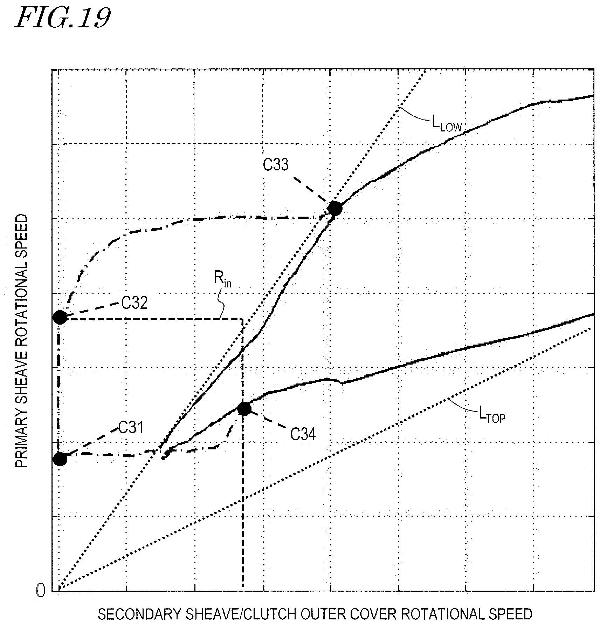

FIG. **19** to FIG. **21** are diagrams illustrating a method of determining the state of the centrifugal clutch **300**. In FIG. **19,** the vertical axis represents rotational speed of the primary sheave **13,** and the horizontal axis represents rotational speed of the secondary sheave **14** and rotational speed of the clutch outer cover (clutch housing) **304**. In this example, in order to clearly monitor the clutch state of the test vehicle, rotational speeds are detected by providing sensors for the primary sheave **13,** the secondary sheave **14,** and the clutch outer cover **304**. However, these sensors are provided in order to study whether a clutch state can be determined from engine rotational speed and rear wheel rotational speed (or front wheel rotational speed). These sensors are omissible because driving force control is possible without utilizing these rotational speeds in the driving force control according to the present embodiment.

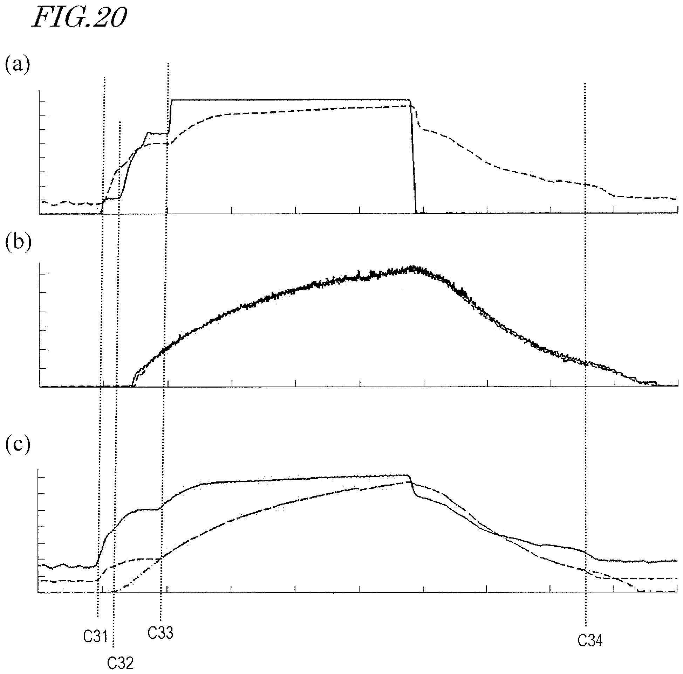

In FIG. **19,** a solid line represents a relationship between rotational speed of the primary sheave **13** and rotational speed of the secondary sheave **14,** and a dot-dash line represents a relationship between rotational speed of the primary sheave **13** and rotational speed of the clutch outer cover **304**. A Top line $L_{TOP}$ is a line corresponding to a state where the transmission ratio of the continuously variable transmission **200** is at the minimum transmission ratio (Top). In FIG. **20(a),** a solid line represents the accelerator position, and a broken line represents rotational speed of the engine **100**. In FIG. **20(b),** a solid line represents rotational speed of the non-driving wheel **7,** and a broken line represents rotational speed of the driving wheel **9**. In FIG. **20(c),** a solid line represents rotational speed of the primary sheave **13,** a broken line represents rotational speed of the secondary sheave **14,** and a dot-dash line represents rotational speed of the clutch outer cover **304**. A state **C31** is a state where the number of revolutions of the engine **100** has begun to increase. In a state **C32,** the centrifugal clutch **300** transitions from a disengaged state to a half-clutch state. A state **C33** represents a state where the centrifugal clutch **300** has engaged, whereas a state **C34** represents a state where the centrifugal clutch **300** has begun to disengage.

Through vigorous studies by the inventors, it has been found that the determination as to whether the centrifugal clutch **300** is in a half-clutch state or an engaged state can be made by using the Low line $L_{Low}$.

At any rotational speed higher than the clutch-in rotational speed $R_{in}$, in the region on the right side of the Low line $L_{LOW}$, the rotational speed of the secondary sheave **14** and the rotational speed of the clutch outer cover **304** are equal, indicating that the centrifugal clutch **300** is in an engaged state.

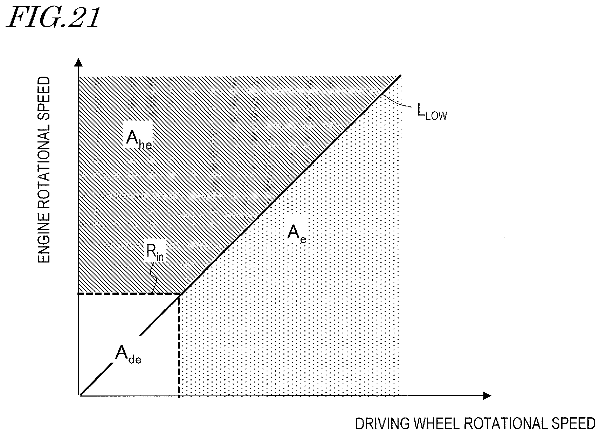

Engine rotational speed and primary sheave rotational speed are in proportional relationship, whereas clutch outer cover rotational speed and driving wheel rotational speed are in proportional relationship. Therefore, it may be said that the relationship between primary sheave rotational speed and clutch outer cover rotational speed is equivalent to the relationship between engine rotational speed and driving wheel rotational speed. By monitoring whether the relationship between engine rotational speed and driving wheel rotational speed is on the right or left side of the Low line $L_{LOW}$, it is possible to determine whether the clutch is in an engaged state or a half-clutch state. As shown in FIG. **21,** the left side of the Low line $L_{LOW}$ defines a half-clutch region $A_{he}$, and the right side defines a clutch-engaged region $A_e$. The region of lower rotational speeds than the clutch-in rotational speed $R_{in}$ defines a clutch-disengaged region $A_{de}$. Thus, the Low line $L_{LOW}$ can be used as a distinction line against which to determine whether the clutch is in an engaged state or a half-clutch state (control switching line).

Moreover, when the clutch outer cover rotational speed is on the left side of the Low line $L_{LOW}$, the relationship between primary sheave rotational speed and secondary sheave rotational speed rests upon the Low line $L_{LOW}$, indicative that the transmission ratio of the continuously variable transmission **200** in a half-clutch state is at the maximum transmission ratio (Low). This indicates that, when in a half-clutch state, the rotational speed of the centrifugal clutch **300,** i.e., the torque capacity of the clutch, can be controlled by controlling the engine rotational speed.

In this manner, it is possible to determine the clutch state with the existing sensors alone.

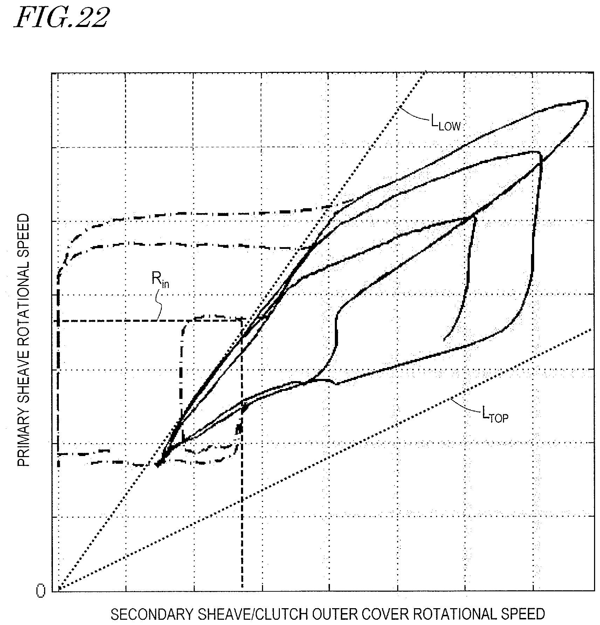

FIG. **22** is a diagram showing a relationship in rotational speed among the primary sheave **13,** the secondary sheave **14,** and the clutch outer cover **304,** where the vehicle **1** goes through various states. It can be seen that, even in states under different accelerator position conditions or in a state where reacceleration is made, etc., the Low line $L_{LOW}$ can be used to determine whether the centrifugal clutch **300** is in a half-clutch state or an engaged state.

Next, a method of setting the Low line $L_{LOW}$ for use in the determination of the state of the centrifugal clutch **300** will be described.

As described above, the Low line $L_{LOW}$ is a line representing the relationship between rotational speed of the engine **100** and rotational speed of the driving wheel **9** in the case where the continuously variable transmission **200** has the maximum transmission ratio. As the value of the maximum transmission ratio of the continuously variable transmission **200** to be used in setting the Low line $L_{LOW}$, a design value may be used, or, as described below, a value which is obtained by factoring product-to-product variations and aging may be used.

In setting the Low line $L_{LOW}$, it is desirable to measure the maximum transmission ratio for each vehicle to be equipped with the system, and individually set a Low line $L_{LOW}$ for them. However, when mass-produced products are to be equipped, it is difficult to determine the transmission ratio for each and every individual product. Therefore, the maximum transmission ratio is to be set at a representative value; however, due to production tolerance, there will be difference between the actual maximum transmission ratio and the setting value. Moreover, since the maximum transmission ratio will change through aging, there will be difference between the actual maximum transmission ratio and the representative value which was set during product development.

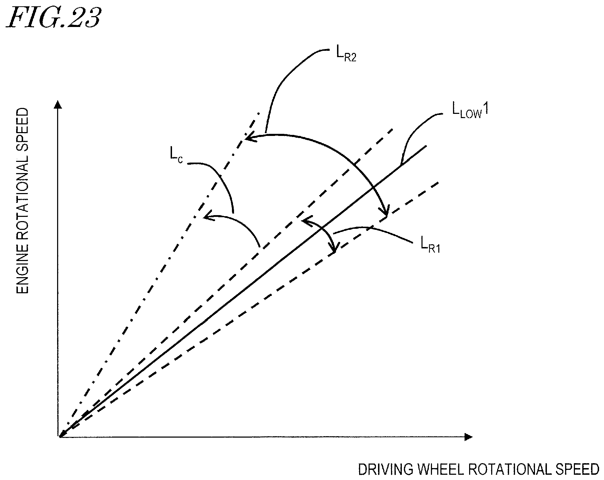

FIG. **23** is a diagram showing variation in the maximum transmission ratio. In FIG. **23,** the vertical axis represents rotational speed of the engine **100,** and the horizontal axis represents rotational speed of the driving wheel **9.**

It has been found through vigorous studies by the inventors that, in aging, the factor that affects the maximum transmission ratio the most is the wear of the V belt **15.** The V belt **15** becomes gradually worn as the traveled distance of the vehicle increases. When the V belt **15** becomes worn, the maximum transmission ratio changes in an increasing direction (i.e., so that the driving wheel rotational speed relative to the engine rotational speed decreases). In the graph of FIG. **23,** the Low line changes so as to become more upright through aging.

Referring to FIG. **23,** against the design Low line $L_{LOW}1$, the production tolerance among mass-produced products allows the actual maximum transmission ratios of the respective individual products to be distributed across a predetermined range $L_{R1}$. Also, the actual maximum transmission ratio changes through aging $L_C$. Now, the maximum value of change in the maximum transmission ratio that is caused by aging may be defined as a value which is expectable at a level of aging that threatens an immediate part replacement, for example.

Some of the parts that compose a vehicle are designated to be replaced when the vehicle reaches a predetermined traveled distance. For example, since the V belt **15** wears with traveled distance of the vehicle, a traveled distance of the vehicle at which the V belt **15** needs to be replaced is set in advance. The Low line can be set by estimating a state of the transmission (the state of wear of the V belt **15**) at the traveled distance which requires such replacement. For example, if it is expected that the width of the V belt **15** will become 10% smaller from its initial state due to wear after traveling a predetermined distance, the maximum transmission ratio in such a state of wear may be measured in advance, and this value may be regarded as the aforementioned maximum value in setting the Low line. For example, the Low line may be set by adopting the maximum value of this maximum transmission ratio, or any arbitrary value between this maximum value and the aforementioned representative value may be adopted in setting the Low line.

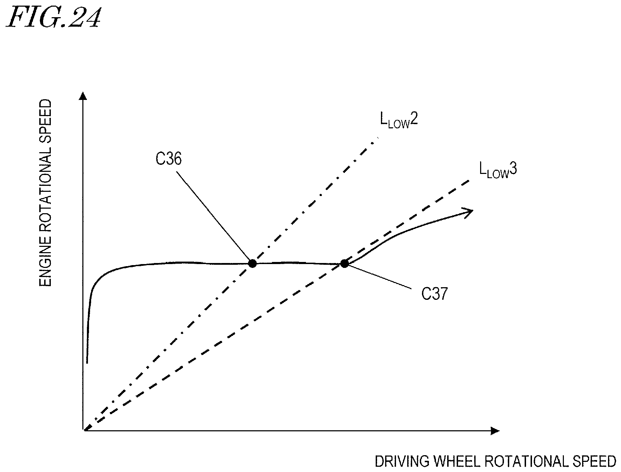

FIG. **24** is a diagram showing a relationship between rotational speed of the engine **100** and rotational speed of the driving wheel **9** in the case where the actual Low line differs from a set Low line. In FIG. **24,** the vertical axis represents rotational speed of the engine **100,** and the horizontal axis represents rotational speed of the driving wheel **9.**

In FIG. **24,** the maximum transmission ratio of the set Low line $L_{LOW}2$ is greater than that of the actual Low line $L_{LOW}3$. For example, the Low line $L_{LOW}2$ is set by taking into account the wear of the V belt **15** as an aging factor. Since the maximum transmission ratio increases with wear of the V belt **15,** the maximum transmission ratio of the Low line $L_{LOW}2$ is greater than that of the Low line $L_{LOW}3$. When control is performed by using the Low line $L_{LOW}2$, the driving force controller **600** will determine in a state **C36** that the centrifugal clutch **300** has engaged, although in fact the centrifugal clutch **300** is still in a half-clutch state. Then, in a state **C37,** the centrifugal clutch **300** actually becomes engaged, after which rotational speed will change along the Low line $L_{LOW}3$.

Once the centrifugal clutch **300** engages, the engine **100** and the driving wheel **9** might as well be regarded as being directly connected; therefore, the rotational speed of the engine **100** and the rotational speed of the driving wheel **9** will change, in proportional relationship, along the maximum transmission ratio. Then, when the rotational speed of the engine **100** becomes somewhat large, the continuously variable transmission **200** automatically shifts, after which the relationship between rotational speed of the engine **100** and rotational speed of the driving wheel **9** will deviate from the Low line $L_{LOW}3$.

During the transition from the state **C36** to the state **C37,** a control pertaining to the case where the clutch is in an engaged state is performed, although what exists is actually a half-clutch state. However, the state from the state **C36** to the state **C37** is a kind of half-clutch state that is close to an engaged state, and this state ends in a short period of time; thus, it will hardly affect the behavior of the vehicle **1,** and any change in behavior will be kept to a level where no oddness is felt to the rider. Therefore, there is no problem in performing the control by using the Low line $L_{LOW}2$, which is based on the maximum transmission ratio being large enough to account for aging.

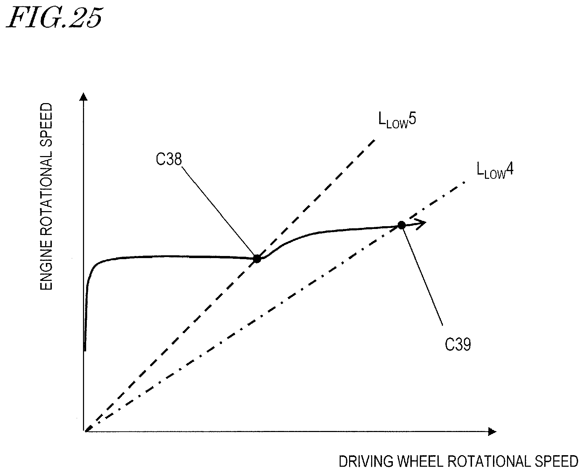

Next, the operation in the case where the maximum transmission ratio of the set Low line is smaller than that of the actual Low line will be described. FIG. **25** is a diagram showing a relationship between rotational speed of the engine **100** and rotational speed of the driving wheel **9** in the case where the maximum transmission ratio of the set Low line is smaller than that of the actual Low line. In FIG. **25,** the vertical axis represents rotational speed of the engine **100,** and the horizontal axis represents rotational speed of the driving wheel **9.** In FIG. **25,** the maximum transmission ratio of the set Low line $L_{LOW}4$ is smaller than that of the actual Low line $L_{LOW}5$.

In a state **C38,** although the centrifugal clutch **300** is actually in an engaged state, the driving force controller **600** is performing a control pertaining to a half-clutch state (i.e., control to suppress rotational speed of the engine **100**), and therefore the rotational speed of the engine **100** is unlikely to increase. Once the centrifugal clutch **300** engages, the engine **100** and the driving wheel **9** might as well be regarded as being directly connected; therefore, if the rotational speed of the engine **100** is unlikely to increase, then the vehicle speed (driving wheel speed) is also unlikely to increase, thereby resulting in a sense of insufficient acceleration and maxing out of vehicle speed. When a state **C39** is reached, the driving force controller **600** determines that the centrifugal clutch **300** has become engaged, after which appropriate control will be performed; however, in order to reach the state **C39,** the continuously variable transmission **200** needs to undergo some shifting. Before the state **C39** is reached, increase in the rotational speed of the engine **100** is being suppressed, which makes shifting of the continuously variable transmission **200** unlikely to occur, and increase in the vehicle speed unlikely to occur; therefore, transition from the state **C38** to the state **C39** takes a long time, thus allowing the rider to feel a sense of insufficient acceleration. Therefore, in order to set the Low line in a manner of taking the production tolerance and aging into account, the setting is to be made so that the maximum transmission ratio of the set Low line is not smaller than that of the actual Low line.

Moreover, the Low line does not need to be of a fixed value. For example, in accordance with the traveled distance of the vehicle, the Low line may be changed in a direction of increasing the maximum transmission ratio. Alternatively, for example, the Low line may undergo a stepwise change every time the vehicle travels a certain distance. This allows a more accurate determination of the state of the centrifugal clutch **300** and control of driving force.

Note that the aforementioned method of setting the Low line is an example; the Low line may be set by any method other than the above.

Moreover, depending on whether the centrifugal clutch **300** is transitioning from a half-clutch state to an engaged state or transitioning from an engaged state to a half-clutch state, the clutch state determination may be made by using different Low lines.

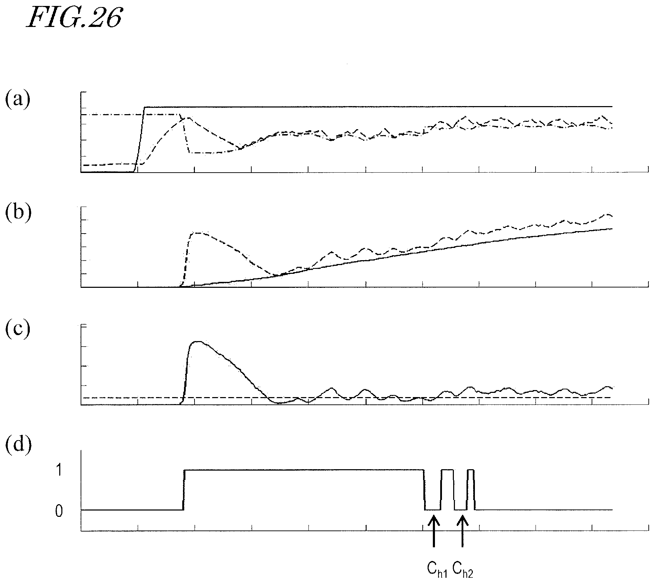

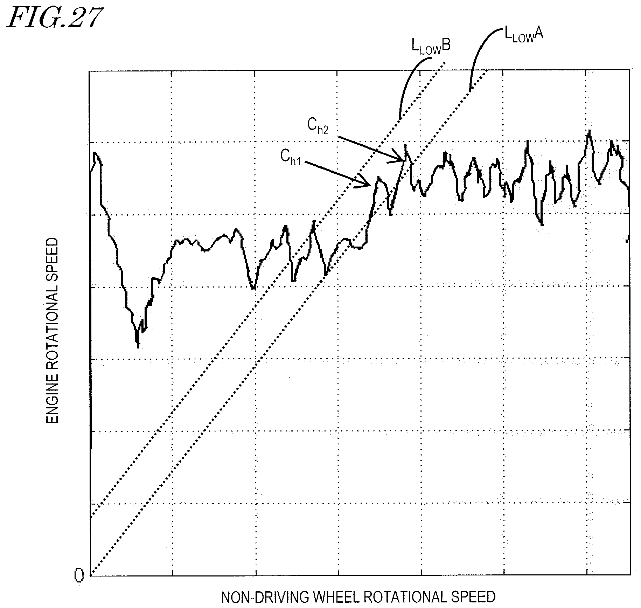

The clutch state determination can be made on the basis of whether the relationship between rotational speed of the engine **100** and wheel speed (front wheel or rear wheel) is on the right side or the left side of the set Low line. However, in an actual vehicle, these physical parameters may oscillate (i.e., fluctuate in rapid and minute steps), and this oscillation may also cause the clutch state determination to oscillate (chattering). FIG. **26** and FIG. **27** are diagrams describing such states.

In FIG. **26(a),** a solid line represents the accelerator position, a broken line represents rotational speed of the engine **100,** and a dot-dash line represents target rotational speed of the engine **100.** In FIG. **26(b),** a solid line represents rotational speed of the non-driving wheel **7,** and a broken line represents rotational speed of the driving wheel **9**. In FIG. **26(c),** a solid line represents the slip amount of the driving wheel **9,** and a broken line represents the target slip amount. In FIG. **26(d),** a solid line represents half-clutch determination, where "1" denotes a state of detecting a half-clutch and "0" denotes a state of not detecting a half-clutch. In the example of FIG. **26,** as the rotational speed of the engine **100** changes in an oscillating manner, the clutch determination is changing in an oscillating manner (chattering), as demonstrated by a state $C_{h1}$ and a state $C_{h2}$. In this situation, as shown in FIG. **27,** the line representing the relationship between rotational speed of the engine **100** and rotational speed of the driving wheel **9** keeps crossing the Low line $L_{LOW}A$. In order to prevent such chattering, one may add a Low line $L_{LOW}B$ which allows for some hysteresis width, and use the Low line $L_{LOW}A$ for determination when the centrifugal clutch **300** transitions from a half-clutch state to an engaged state, and use the Low line $L_{LOW}B$ for determination when the centrifugal clutch **300** transitions from an engaged state to a half-clutch state. This can prevent the aforementioned chattering, thus stabilizing the control.

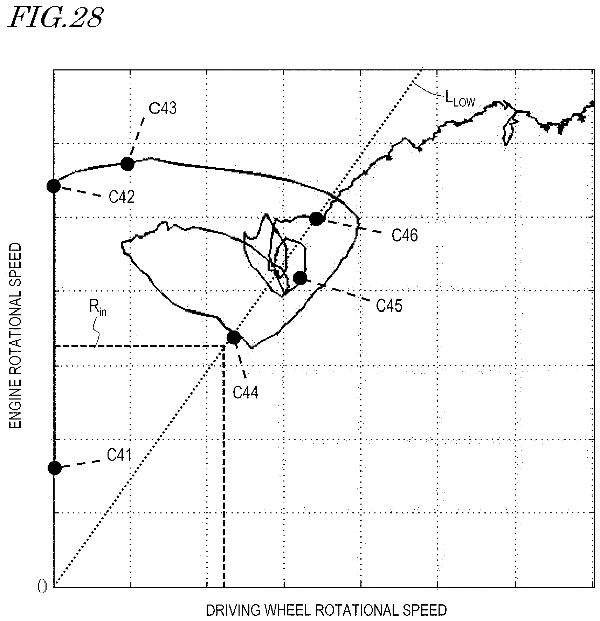

Next, a method of determining the state of the centrifugal clutch **300** on the basis of the rotational speed of the non-driving wheel **7** will be described. FIG. **28** to FIG. **30** are diagrams describing a method of determining the state of the centrifugal clutch **300.**

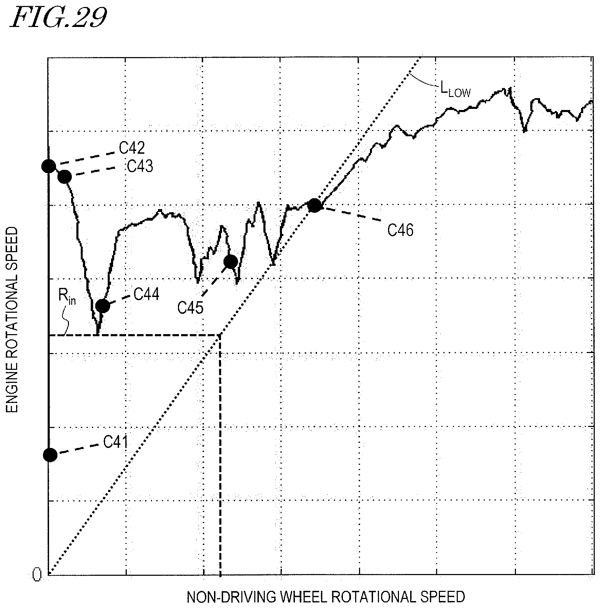

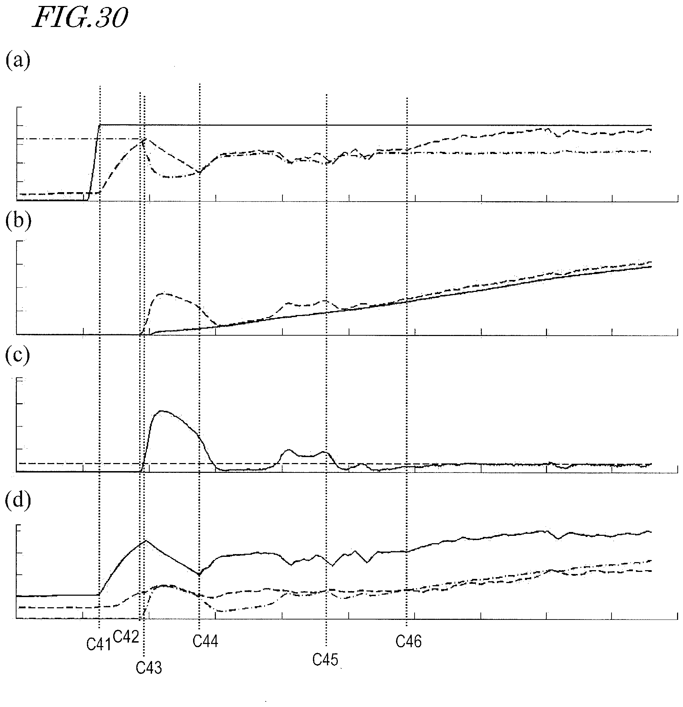

In FIG. **28,** the vertical axis represents rotational speed of the engine **100,** and the horizontal axis represents rotational speed of the driving wheel **9.** In FIG. **29,** the vertical axis represents rotational speed of the engine **100,** and the horizontal axis represents rotational speed of the non-driving wheel 7. In FIG. **30(a),** a solid line represents the accelerator position, a broken line represents rotational speed of the engine **100,** and a dot-dash line represents target rotational speed of the engine **100.** In FIG. **30(b),** a solid line represents rotational speed of the non-driving wheel **7,** and a broken line represents rotational speed of the driving wheel **9.** In FIG. **30(c),** a solid line represents the slip amount of the driving wheel **9,** and a broken line represents the target slip amount. In FIG. **30(d),** a solid line represents rotational speed of the primary sheave **13,** a broken line represents rotational speed of the secondary sheave **14,** and a dot-dash line represents rotational speed of the clutch outer cover **304.** Similarly to the above, in order to clearly monitor the clutch state of the test vehicle, rotational speeds are detected by providing sensors for the primary sheave **13,** the secondary sheave **14,** and the clutch outer cover **304.** However, driving force control is possible without utilizing these rotational speeds in the driving force control according to the present embodiment; therefore, these sensors are omissible.

A state **C41** represents a state where the rider has activated the accelerator and the rotational speed of the engine **100** has begun to increase. At this point, the centrifugal clutch **300** is disengaged. As the rotational speed of the engine **100** increases, the centrifugal clutch upstream component **300a** and the centrifugal clutch downstream component **300b** come into contact due to a centrifugal force which is in accordance with the rotation of the centrifugal clutch upstream component **300a,** so that torque is transmitted in a half-clutch state. In a state **C42,** the rotational speed of the driving wheel **9,** to which torque is transmitted from the downstream component **300b,** begins to increase. Also, the rotational speed of the non-driving wheel **7** begins to increase gradually. As the rotational speed of the engine **100** increases, the centrifugal force increases, thus increasing the transmitted torque.

As the torque which is transmitted from the downstream component **300b** to the driving wheel **9** increases, the slip amount of the driving wheel **9** keeps increasing. When the slip amount of the driving wheel **9** becomes equal to or greater than the target slip amount, control is begun in a state **C43** to ensure that the rotational speed of the engine **100** tracks the target rotational speed. Now that control is begun to ensure that the rotational speed of the engine **100** tracks the target rotational speed, the rotational speed of the engine **100** decreases, but a lag occurs, during which time the clutch **300** becomes engaged. After the slip amount of the driving wheel **9** keeps increasing for a while, it then begins to decrease.

With a decrease in rotational speed of the engine **100** and the driving wheel **9,** the upstream component **300a** and the downstream component **300b** begin to leave each other to enter a half-clutch state in a state **C44.** Through control to ensure that the rotational speed of the engine **100** tracks the target rotational speed, while the slip amount of the driving wheel **9** maintains a value at which gripping is attained (i.e., a value which is equal to or less than the target slip amount), the rotational speed of the driving wheel **9** begins to increase, whereby the vehicle **1** keeps accelerating.

Now, if the driving wheel **9** significantly slips due to disturbances or the like so as to cause a drastic increase in the rotational speed, the centrifugal clutch **300** may become engaged, as depicted by a state **C45.** Since the centrifugal clutch **300** has engaged, the control to ensure that the rotational speed of the engine **100** tracks the target rotational speed is now ended. However, even if the driving wheel **9** significantly slips due to disturbances or the like, as in the state **C45,** the amount of change in the rotational speed of the non-driving wheel **7** will be small, and therefore the state of the non-driving wheel **7** will remain in the half-clutch region, as shown in FIG. **29.** Thus, by determining the state of the centrifugal clutch **300** on the basis of the rotational speed of the non-driving wheel **7,** it becomes possible to maintain the control to ensure that the rotational speed of the engine **100** tracks the target rotational speed even when a significant slip is experienced by the driving wheel **9** due to the aforementioned disturbances or the like.

In a state **C46,** the centrifugal clutch **300** properly engages, and the control to ensure that the rotational speed of the engine **100** tracks the target rotational speed is ended. After the centrifugal clutch **300** has engaged, the processes from steps **S11** to **S15** in FIG. **16** are executed.

In the absence of significant slips, the rotational speed of the driving wheel **9** and the rotational speed of the non-driving wheel **7** are essentially equal; thus, determination of the state of the centrifugal clutch **300** can also be made on the basis of the non-driving wheel **7.** Generally speaking, after clutch engagement, the transmission ratio will change, and the driving wheel torque will become small; therefore, significant slips are relatively unlikely to occur. Therefore, there will be no substantial difference between determining the state of the centrifugal clutch **300** on the basis of the non-driving wheel **7** and making the determination on the basis of the driving wheel **9.** If a significant slip occurs in a half-clutch state, the centrifugal clutch **300** will engage, but what is actually desirable is to perform a clutch torque control that corresponds to a half-clutch state. Even in the presence of a significant slip, the rotational speed of the non-driving wheel **7** is hardly affected, so that the state of the non-driving wheel **7** will remain on the left side of the Low line $L_{LOW}$. Therefore, by determining the state of the centrifugal clutch **300** on the basis of the non-driving wheel **7,** it becomes possible to maintain a clutch torque control that corresponds to a half-clutch state, even if a significant slip occurs in a half-clutch state. In order to know momentary states of the centrifugal clutch **300,** it is better to determine the clutch state on the basis of the driving wheel **9;** in terms of utility in the determination for switching control, however, a more stable operation can be obtained by determining the clutch state on the basis of the non-driving wheel **7.**

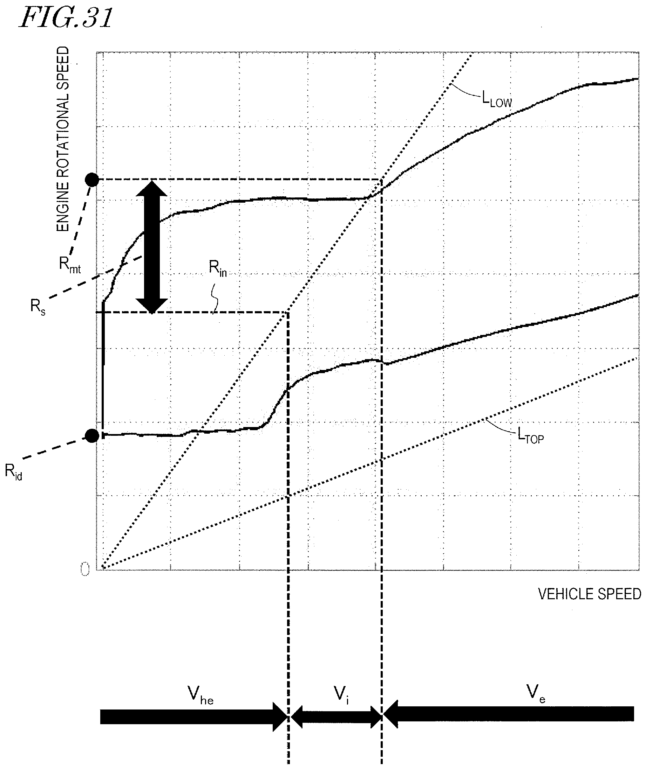

Next, a method of determine the state of the centrifugal clutch **300** on the basis of vehicle speed will be described. FIG. **31** is a diagram describing a method of determining the state of the centrifugal clutch **300.**

In FIG. **31,** the vertical axis represents rotational speed of the engine **100,** and the horizontal axis represents vehicle speed. The method of determining the state of the centrifugal clutch **300** on the basis of the driving wheel **9** which has been described with reference to FIG. **19** to FIG. **22** is capable of highly accurate determination. The method of determination shown in FIG. **31** is a more simplified method, which is still able to achieve the objective of switching control when a half-clutch state presumably exists, although at a lower accuracy than by the method of determination on the basis of the driving wheel **9.**

In the method of determination shown in FIG. **31,** a half-clutch state is detected when the vehicle speed is equal to or less than a threshold, and an engaged state is detected when it is equal to or greater than the threshold. As the vehicle speed, the speed of the non-driving wheel **7** may be adopted, or a speed which is calculated based on the rotational speed of the non-driving wheel 7 and the rotational speed of the driving wheel **9** may be adopted.

In a stopped state, the engine **100** is rotating at an idling rotational speed $R_{id}$. When launching from a stopped state, it is generally the case that, in a half-clutch state, the vehicle speed keeps increasing while maintaining a constant engine rotational speed. The rotational speed in this case is called the stall rotational speed. Although the stall rotational speed may vary depending on the accelerator position and the like, the clutch will not transmit force if the rotational speed is equal to or less than the clutch-in rotational speed $R_{in}$, and on the other hand, the stall rotational speed will never be greater than the maximum-torque rotational speed $R_{mt}$ of the engine **100;** thus, there are bounds to the stall rotational speed. Since the transmission ratio in a half-clutch is at the maximum transmission ratio (Low), the centrifugal clutch **300** may be regarded as engaged when in a velocity region $V_e$ equal to or greater than a vehicle speed corresponding to the upper limit of the stall rotation region $R_s$. On the other hand, the centrifugal clutch **300** may be regarded as being in a half-clutch state or a disengaged state, when in a velocity region $V_{he}$ equal to or less than a vehicle speed corresponding to the lower limit of the stall rotation region $R_s$. Although the state of the centrifugal clutch **300 is** uncertain in a velocity region $V_i$ between the velocity region $V_{he}$ and the velocity region $V_e$, providing a threshold at an arbitrary position within the velocity region $V_i$ makes possible a distinction between a half-clutch state and an engaged state, although at a lower accuracy of determination.

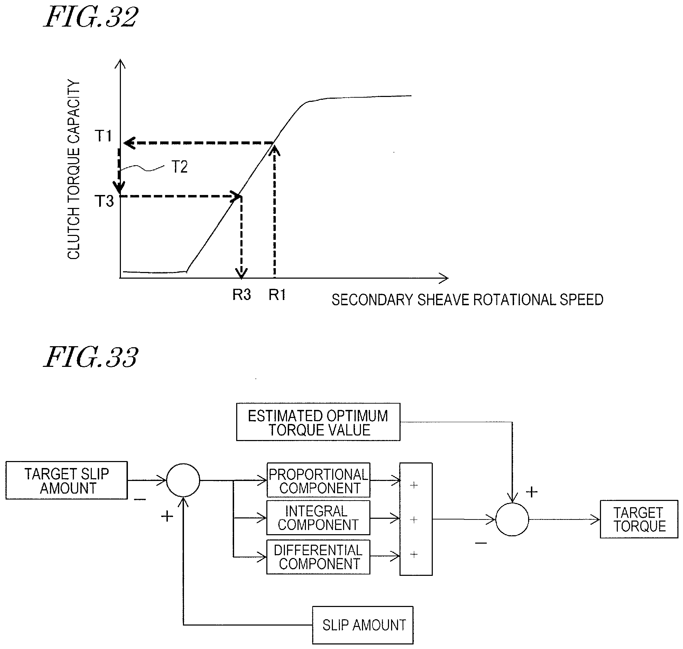

Next, a method of determining the target rotational speed of the engine **100** will be described. FIG. **32** is a diagram illustrating a clutch model representing the characteristics of the centrifugal clutch **300.** The vertical axis represents clutch torque capacity, and the horizontal axis represents rotational speed of the secondary sheave **14.**

In this method, first, while the centrifugal clutch **300** is in a half-clutch state, a rotational speed of the secondary sheave **14 R1** is calculated from the engine rotational speed of a moment at which a slip of the driving wheel **9** exceeding the target slip amount has apparently occurred. Since the transmission ratio in a half-clutch is at the maximum transmission ratio (Low), the secondary sheave rotational speed **R1** can be calculated based on the engine rotational speed. From the clutch model of FIG. **32,** a torque **T1** that is on the clutch shaft when the secondary sheave **14** is at the rotational speed **R1** can be determined.

Moreover, an amount of change over time in the slip amount at a moment when a slip of the driving wheel **9** exceeding the target slip amount has apparently occurred (i.e., a difference from a slip amount at a certain previous point in time) is determined. Note that the rotational speed of the non-driving wheel **7** is essentially zero at the low speeds upon launch or immediately after launch, and therefore the amount of change over time in the rotational speed of the driving wheel **9** might be adopted as an amount of change over time in the slip amount.

The amount of change in the slip amount is multiplied by a coefficient which is determined from the moment of inertia of the driving wheel, the radius of the driving wheel, etc., whereby a surplus torque of the driving wheel **9** is calculated. An exemplary method of calculating the surplus torque is shown below.

In an ideal accelerate where no slip is occurring, the amount of change in the rotational speed $\omega_R$ of the driving wheel **9** and the amount of change in the rotational speed $\omega_F$ of the non-driving wheel **7** are equal, and thus the following relationship holds true.

[eq. 1]

$$R_R \dot{\omega}_R = R_F \dot{\omega}_F$$

$$\cdots \; (1)$$

Herein, $R_R$ is the radius of the driving wheel **9,** and $R_F$ is the radius of the non-driving wheel **7.** Each dot means amount of change over time. From this, an optimum amount of change in the rotational speed of the driving wheel 9 can be expressed as follows.

[eq. 2]

$$\widetilde{\omega}_R = \frac{R_F}{R_R} \dot{\omega}_F$$

$$\cdots \; (2)$$

Suppose that the driving wheel **9** has a moment of inertia I. Since the driving wheel **9** moves in conjunction with the deceleration gear and the clutch outer cover, the moment of inertia **I** also contains moments of inertia of them. Given a slip amount $\lambda$ of the driving wheel **9** at the moment when a slip exceeding the target slip amount has apparently occurred, the surplus torque $T_{EX}$ of the driving wheel **9** can be expressed as follows.

[eq. 3]

$$T_{EX} = I\left(\dot{\omega}_R - \widetilde{\omega}_R\right) = I\left(\dot{\omega}_R - \frac{R_F}{R_R}\dot{\omega}_F\right) = \frac{I}{R_R}\dot{\lambda}$$

$$\cdots\ (3)$$

Thus, the surplus torque can be calculated by multiplying the amount of change in the slip amount by a predetermined coefficient.

This surplus torque $T_{EX}$ of the driving wheel **9** is multiplied by the transmission ratio of the deceleration gear, thus being translated into a surplus torque **T2** on the clutch shaft. A torque **T3,** which is obtained by subtracting the surplus torque **T2** from the clutch torque **T1** when a slip exceeding the target slip amount has occurred, is set as the optimum torque to the target torque. From the clutch model, a rotational speed **R3** of the secondary sheave **14** corresponding to the target torque **T3** can be determined. By multiplying this rotational speed **R3** of the secondary sheave **14** by a transmission ratio of the continuously variable transmission **200** in the maximum transmission ratio (Low) state, the target rotational speed of the engine **100** can be calculated.

Note that the aforementioned target torque (estimated optimum torque value) is calculated based on the information of a moment at which a slip exceeding the target slip amount has apparently occurred. However, as the vehicle **1** travels forward, or as time passes, the road surface and other kinds of situations will incessantly change, and the influences of disturbances will also accumulate. Therefore, as shown in FIG. **33,** a feedback may be given to the estimated optimum torque value by using a difference between the slip amount of the driving wheel **9** and the target slip amount, thus consecutively correcting the target torque. For example, the target torque may be corrected in accordance with at least one or more components, among a proportional component, an integral component, and a differential component, of the difference between the slip amount and the target slip amount, as shown in FIG. **33.** The proportional component will act to, when there is a deviation between the slip amount and the target slip amount, correct the target torque so that the deviation is decreased. The integral component acts to prevent a steady-state deviation between the slip amount and the target slip amount. In a correction based on the proportional component, as the deviation between the slip amount and the target slip decreases, the effect of correction becomes reduced, beyond which the action of reducing the deviation between the slip amount and the target slip will be lost; on the other hand, the integral component stores past information, and therefore will provide an action of correcting the steady-state deviation. The differential component acts to, when the slip amount changes relative to the target slip amount, make a correction of suppressing the change. In a correction based on the proportional component, correction begins to act only after a deviation occurs between the slip amount and the target slip amount; in a correction based on the differential component, however, correction begins to act as soon as the deviation changes, thus providing a superior response. By consecutively correcting the target torque through at least one of such feedbacks, a more accurate clutch torque control is realized to ensure that the slip amount of the driving wheel is less than the target slip.

Thus, embodiments of the present invention have been described.

In the above embodiments, when the centrifugal clutch **300** is in a half-clutch state while the driving wheel **9** is slipping, the driving force of the driving wheel **9** in the downstream-of-centrifugal-clutch path is controlled in accordance with a physical parameter concerning rotation of the upstream-of-centrifugal-clutch path; however, the present invention is not limited thereto. Irrespective of whether slipping of the driving wheel **9** has occurred or not, whenever the centrifugal clutch **300** is in a half-clutch state, the driving force of the driving wheel **9** in the downstream-of-centrifugal-clutch path may be controlled in accordance with a physical parameter concerning rotation of the upstream-of-centrifugal-clutch path. For example, in a vehicle having an engine output, etc., there is a problem in that an unintended acceleration may occur when an incorrect accelerator manipulation is made. In such a vehicle, the rider may be allowed to select among settings, such as power modes (e.g., rain mode), depending on the situation; and the method of the present invention may be employed when the power mode has been set to a low output, thus providing an effect of being able to restrict the output at launch (i.e., when in a half-clutch state). This is because, in a half-clutch state, controlling the engine rotation is equivalent to controlling the clutch torque output. Other than an output selection being made by the rider, for example, the method of the present invention may also be applicable to when the computer has detected unnecessary (excessive) acceleration from the front/rear speed, etc., or to mileage and noise disturbance improvements.

Although various processes are performed by mainly using a slip amount in the above embodiments, the various processes may also be performed by using a slip rate, instead of a slip amount.

Although the above embodiments illustrate an internal combustion engine as a driving source, other driving sources such as an electric motor may also be used.

The present invention is practicable not only in terms of manufacture, sale, use, or the like of driving force control system, but also in the form of a vehicle equipped with such a driving force control system.

A straddled vehicle, as one example of a vehicle according to the present invention, may also encompass a 3-wheel motorcycle and an ATV. Three-wheel motorcycles come in a type with one driving wheel, and also a type with plural driving wheels. On the other hand, an ATV usually has plural driving wheels. The above-described embodiments are straightforwardly applicable to any 3-wheel motorcycle with one driving wheel. As for the types of 3-wheel motorcycles and ATVs with plural driving wheels, the above-described embodiments would be applicable with respect to each driving wheel. Other possible examples of vehicles include ROVs (Recreational Off-Highway Vehicles), snowmobiles, and so on. The present invention is applicable to any vehicle in which a centrifugal clutch is mounted and which is capable of traction control.

Although embodiments of vehicles in which a continuously variable transmission (CVT) is mounted as the transmission mechanism have been illustrated, this is an example. A vehicle in which a non-continuous transmission mechanism is mounted as the transmission mechanism is also applicable.

## INDUSTRIAL APPLICABILITY

The present invention is particularly useful in the fields of vehicles in which a centrifugal clutch is mounted.

## REFERENCE SIGNS LIST

| | |
|---|---|
| **1** | motorcycle (vehicle) |
| **7** | front wheel (non-driving wheel) |
| **8a** | rear-wheel speed sensor |
| **8b** | front-wheel speed sensor |
| **9** | rear wheel (driving wheel) |
| **10** | engine unit |
| **10a** | upstream-of-centrifugal-clutch path |
| **10b** | downstream-of-centrifugal-clutch path |
| **100** | engine |
| **200** | continuously variable transmission (CVT) |
| **300** | centrifugal clutch |
| **400** | deceleration gear |
| **600** | driving force controller |

## Claims

1. A driving force control system for use in a vehicle, the vehicle including a driving source (10), a driving wheel (9) to be driven by motive power from the driving source (10), and a centrifugal clutch (300) provided in a transmission path of motive power between the driving source (10) and the driving wheel (9), wherein
the centrifugal clutch (300)

   includes an upstream component mechanically connected to the driving source (10) to rotate and a downstream component to be mechanically connected with or disengaged from the upstream component based on a centrifugal force which is in accordance with rotation of the upstream component, and
   automatically turns ON or OFF, with the centrifugal force which is in accordance with rotation of the upstream component of the centrifugal clutch (300), transmission of motive power between an upstream-of-centrifugal-clutch path (10a) from the driving source (10) to the upstream component and a downstream-of-centrifugal-clutch path (10b) from the downstream component to the driving wheel (9),

   **characterized in that**
   the driving force control system

   controls a driving force of the driving wheel (9) in the downstream-of-centrifugal-clutch path (10b) in accordance with a physical parameter concerning rotation of the upstream-of-centrifugal-clutch path (10a), at least when the centrifugal clutch (300) is in a half-clutch state, and
   at least when the centrifugal clutch (300) is in a half-clutch state, a rotational speed of the driving source (10) is changed so as to approach a target rotational speed by using the physical parameter concerning rotation of the upstream-of-centrifugal-clutch path (10a).

2. The driving force control system of claim 1, wherein, when the centrifugal clutch (300) is in an engaged state, the driving force of the driving wheel (9) in the downstream-of-centrifugal-clutch path (10b) is controlled based on a physical parameter concerning rotation of the downstream-of-centrifugal-clutch path (10b) and a physical parameter concerning rotation of a non-driving wheel of the vehicle.

3. The driving force control system of claim 1 or 2, wherein a state of the centrifugal clutch (300) is determined based on a relationship between: at least one of a physical parameter concerning rotation of the downstream-of-centrifugal-clutch path (10b) and a physical parameter concerning rotation of a non-driving wheel (7) of the vehicle; and the physical parameter concerning rotation of the upstream-of-centrifugal-clutch path (10a).

4. The driving force control system of claim 3, wherein a state of the centrifugal clutch (300) is determined based on a relationship between the physical parameter concerning rotation of the upstream-of-centrifugal-clutch path (10a) and the physical parameter concerning rotation of the downstream-of-centrifugal-clutch path (10b) when a transmission (200) of the vehicle is at a maximum transmission ratio.

5. The driving force control system of claim 4, wherein the relationship between the physical parameter concerning rotation of the upstream-of-centrifugal-clutch path (10a) and the physical parameter concerning rotation of the downstream-of-centrifugal-clutch path (10b) when the transmission (200) of the vehicle is at the maximum transmission ratio is set by estimating a state of the transmission (200) after the vehicle has traveled a predetermined distance.

6. The driving force control system of any of claims 1 to 5, wherein, at least when the centrifugal clutch (300) is in a half-clutch state, a rotational speed of the driving source (10) is changed in accordance with the physical parameter concerning rotation of the upstream-of-centrifugal-clutch path (10a).

7. The driving force control system of any of claims 1 to 6, wherein, when the centrifugal clutch (300) is in an engaged state, an output of the driving source (10) is changed based on a physical parameter concerning rotation of the downstream-of-centrifugal-clutch path (10b) and a physical parameter concerning rotation of a non-driving wheel (7) of the vehicle.

8. The driving force control system of any of claims 1 to 7, wherein,
the driving force control system is a system of adjusting a slip of the driving wheel (9) when the driving wheel (9) is slipping; and
the target rotational speed is a rotational speed at which the driving wheel (9) attains a predetermined slip.

9. The driving force control system of any of claims 1 to 8, wherein,
the driving force control system is a system of adjusting a slip of the driving wheel (9) when the driving wheel (9) is slipping; and
the target rotational speed is a rotational speed at which the driving wheel (9) attains gripping.

10. The driving force control system of any of claims 1 to 9, wherein the target rotational speed is set based on relative magnitudes of a physical parameter concerning rotation of the downstream-of-centrifugal-clutch path (10b) and a physical parameter concerning rotation of a non-driving wheel (7) of the vehicle.

11. The driving force control system of any of claims 1 to 9, wherein,
the driving force control system is a system for adjusting a slip of the driving wheel (9) when the driving wheel (9) is slipping; and
the target rotational speed is set based on a relationship between the physical parameter concerning rotation of the upstream-of-centrifugal-clutch path (10a) and an amount of change in the slip of the driving wheel (9).

12. The driving force control system of any of claims 1 to 9, wherein the target rotational speed is set based on a relationship between the physical parameter concerning rotation of the upstream-of-centrifugal-clutch path (10a) and an amount of change in a physical parameter concerning rotation of the downstream-of-centrifugal-clutch path (10b).

13. The driving force control system of claims 11 or 12, wherein the target rotational speed is set based on a surplus torque.

14. The driving force control system of any of claims 1 to 13, wherein,

the driving force control system is a system for adjusting a slip of the driving wheel (9) when the driving wheel (9) is slipping; and

when the centrifugal clutch (300) is in an engaged state, an output of the driving source (10) is changed so that the slip of the driving wheel (9) becomes equal to or less than a target slip, based on a physical parameter concerning rotation of the downstream-of-centrifugal-clutch path (10b) and a physical parameter concerning rotation of a non-driving wheel (7) of the vehicle.

15. A vehicle comprising the driving force control system of any of claims 1 to 14.

**Patentansprüche**

1. Antriebskraft-Steuerungssystem zum Einsatz in einem Fahrzeug, wobei das Fahrzeug eine Antriebsquelle (10), ein antreibendes Rad (9), das mit Antriebskraft von der Antriebsquelle (10) angetrieben wird, sowie eine Fliehkraftkupplung (300) enthält, die auf einem Übertragungsweg für Antriebskraft zwischen der Antriebsquelle (10) und dem antreibenden Rad (9) vorhanden ist, wobei
die Fliehkraftkupplung (300)

eine vorgelagerte Komponente, die mit der Antriebsquelle (10) mechanisch verbunden ist und sich dreht, sowie eine nachgelagerte Komponente enthält, die auf Basis einer Zentrifugalkraft, die Drehung der vorgelagerten Komponente entspricht, mechanisch mit der vorgelagerten Komponente verbunden oder von ihr getrennt wird, und
mit der Zentrifugalkraft, die Drehung der vorgelagerten Komponente der Fliehkraftkupplung (300) entspricht, Übertragung von Antriebskraft zwischen einem der Fliehkraftkupplung vorgelagerten Weg (10a) von der Antriebsquelle (10) zu der vorgelagerten Komponente und einem der Fliehkraftkupplung nachgelagerten Weg (10b) von der nachgelagerten Komponente zu dem antreibenden Rad (9) automatisch AN oder AUS schaltet,

**dadurch gekennzeichnet, dass**
das Antriebskraft-Steuerungssystem

eine Antriebskraft des antreibenden Rades (9) auf dem der Fliehkraftkupplung nachgelagerten Weg (10b) zumindest dann, wenn sich die Fliehkraftkupplung in einem halb eingekuppelten Zustand befindet, entsprechend einem physikalischen Parameter steuert, der Drehung des der Fliehkraftkupplung vorgelagerten Weges (10a) betrifft, und
eine Drehzahl der Antriebsquelle (10), zumindest wenn sich die Fliehkraftkupplung (300) in einem halb eingekuppelten Zustand befindet, unter Verwendung physikalischen des Parameters steuert, der Drehung des der Fliehkraftkupplung vorgelagerten Weges (10a) betrifft, so geändert wird, dass sie sich einer Soll-Drehzahl nähert.

2. Antriebskraft-Steuerungssystem nach Anspruch 1, wobei, wenn sich die Fliehkraftkupplung (300) in einem eingekuppelten Zustand befindet, die Antriebskraft des antreibenden Rades (9) auf dem der Fliehkraftkupplung nachgelagerten Weg (10b) auf Basis eines physikalischen Parameters, der Drehung des der Fliehkraftkupplung nachgelagerten Weges (10b) betrifft, sowie eines physikalischen Parameters gesteuert wird, der Drehung eines nicht antreibenden Rades des Fahrzeugs betrifft.

3. Antriebskraft-Steuerungssystem nach Anspruch 1 oder 2, wobei ein Status der Fliehkraftkupplung (300) auf Basis einer Beziehung zwischen einem physikalischen Parameter, der Drehung des der Fliehkraftkupplung nachgelagerten Weges (10b) betrifft, und einem physikalischen Parameter, der Drehung eines nicht antreibenden Rades (7) des Fahrzeugs betrifft, oder/und des physikalischen Parameters bestimmt wird, der Drehung des der Fliehkraftkupplung vorgelagerten Weges (10a) betrifft.

4. Antriebskraft-Steuerungssystem nach Anspruch 3 wobei ein Status der Fliehkraftkupplung (300) auf Basis einer Beziehung zwischen dem physikalischen Parameter, der Drehung des der Fliehkraftkupplung vorgelagerten Weges (10aa) betrifft, und dem physikalischen Parameter bestimmt wird, der Drehung des der Fliehkraftkupplung nachgelagerten Weges (10b) betrifft, wenn ein Getriebe (200) des Fahrzeugs mit einem maximalen Übersetzungsverhältnis arbeitet.

5. Antriebskraft-Steuerungssystem nach Anspruch 4 wobei, wenn ein Getriebe (200) des Fahrzeugs mit einem maximalen Übersetzungsverhältnis arbeitet, die Beziehung zwischen dem physikalischen Parameter, der Drehung des der Fliehkraftkupplung vorgelagerten Weges (10a) betrifft, und dem physikalischen Parameter, der Drehung des der Fliehkraftkupplung nachgelagerten Weges (10b) betrifft, festgelegt wird, indem ein Status des Getriebes (200) geschätzt wird, nachdem das Fahrzeug eine vorgegebene Strecke gefahren ist.

6. Antriebskraft-Steuerungssystem nach einem der Ansprüche 1 bis 5, wobei, zumindest wenn sich die Fliehkraftkupplung (300) in einem halb eingekuppelten Zustand befindet, eine Drehzahl der Antriebsquelle (10) entsprechend dem physikalischen Parameter geändert wird, der Drehung des der Fliehkraftkupplung vorgelagerten Weges (10a) betrifft.

7. Antriebskraft-Steuerungssystem nach einem der Ansprüche 1 bis 6, wobei, wenn sich die Fliehkraftkupplung (300) in einem eingekuppelten Zustand befindet, eine Ausgangsleistung der Antriebsquelle (10) auf Basis eines physikalischen Parameters, der Drehung des der Fliehkraftkupplung nachgelagerten Weges (10b) betrifft, sowie eines physikalischen Parameters geändert wird, der Drehung eines nicht antreibenden Rades (7) des Fahrzeugs betrifft.

8. Antriebskraft-Steuerungssystem (1) nach einem der Ansprüche 1 bis 7, wobei,
das Antriebskraft-Steuerungssystem ein System ist, mit dem ein Schlupf des antreibenden Rades (9) reguliert wird, wenn an dem antreibenden Rad (9) Schlupf auftritt; und
die Soll-Drehzahl eine Drehzahl ist, bei der das antreibende Rad (9) einen vorgegebenen Schlupf erreicht.

9. Antriebskraft-Steuerungssystem (1) nach einem der Ansprüche 1 bis 8, wobei,
das Antriebskraft-Steuerungssystem ein System ist, mit dem ein Schlupf des antreibenden Rades (9) reguliert wird, wenn an dem antreibenden Rad (9) Schlupf auftritt; und
die Soll-Drehzahl eine Drehzahl ist, bei der das antreibende Rad (9) Haftung erreicht.

10. Antriebskraft-Steuerungssystem nach einem der Ansprüche 1 bis 9, wobei die Soll-Drehzahl auf Basis relativer Größen eines physikalischen Parameters, der Drehung des der Fliehkraftkupplung nachgelagerten Weges (10b) betrifft, sowie eines physikalischen Parameters festgelegt wird, der Drehung eines nicht antreibenden Rades (7) des Fahrzeugs betrifft.

11. Antriebskraft-Steuerungssystem (1) nach einem der Ansprüche 1 bis 9, wobei,
das Antriebskraft-Steuerungssystem ein System ist, mit dem ein Schlupf des antreibenden Rades (9) reguliert wird, wenn an dem antreibenden Rad (9) Schlupf auftritt; und
die Soll-Drehzahl auf Basis einer Beziehung zwischen dem physikalischen Parameter, der Drehung des der Fliehkraftkupplung vorgelagerten Weges (10a) betrifft, und einem Maß von Änderung des Schlupfs des antreibenden Rades (9) festgelegt wird.

12. Antriebskraft-Steuerungssystem nach einem der Ansprüche 1 bis 9, wobei die Soll-Drehzahl auf Basis einer Beziehung zwischen dem physikalischen Parameter, der Drehung des der Fliehkraftkupplung vorgelagerten Weges (10a) betrifft, und einem Maß der Änderung eines physikalischen Parameters festgelegt wird, der Drehung des der Fliehkraftkupplung nachgelagerten Weges (10b) betrifft.

13. Antriebskraft-Steuerungssystem nach den Ansprüchen 11 oder 12, wobei die Soll-Drehzahl auf Basis eines überschüssigen Drehmoments festgelegt wird.

14. Antriebskraft-Steuerungssystem (1) nach einem der Ansprüche 1 bis 13, wobei,
das Antriebskraft-Steuerungssystem ein System ist, mit dem ein Schlupf des antreibenden Rades (9) reguliert wird, wenn an dem antreibenden Rad (9) Schlupf auftritt; und
wenn sich die Kupplung (300) in einem eingekuppelten Zustand befindet, eine Ausgangsleistung der Antriebsquelle (10) auf Basis eines physikalischen Parameters, der Drehung des der Fliehkraftkupplung nachgelagerten Weges (10b) betrifft, sowie eines physikalischen Parameters, der Drehung eines nicht antreibenden Rades (7) des Fahrzeugs betrifft, so geändert wird, dass der Schlupf des antreibenden Rades (9) einen Soll-Schlupf erreicht oder unterschreitet.

15. Fahrzeug, das das Antriebskraft-Steuerungssystem (1) nach einem der Ansprüche 1 bis 14 umfasst.

**Revendications**

1. Système de commande de force motrice destiné à être utilisé dans un véhicule, le véhicule comprenant une source d'entraînement (10), une roue motrice (9) destinée à être entraînée par la puissance motrice provenant de la source d'entraînement (10), et un embrayage centrifuge (300) disposé dans un trajet de transmission de la puissance motrice entre la source d'entraînement (10) et la roue motrice (9), où l'embrayage centrifuge (300)

comprend un composant amont connecté mécaniquement en rotation à la source d'entraînement (10) et un composant aval destiné à être mécaniquement embrayé ou débrayé du composant amont sur la base d'une force centrifuge correspondant à la rotation du composant amont, et

active ou désactive automatiquement, au moyen de la force centrifuge qui correspond à la rotation du composant amont de l'embrayage centrifuge (300), la transmission de la puissance motrice entre un trajet (10a) en amont de l'embrayage centrifuge, de la source d'entraînement (10) au composant amont, et un trajet (10b) en aval de l'embrayage centrifuge, du composant aval à la roue motrice (9),

**caractérisé en ce que**
le système de commande de force motrice

commande une force motrice de la roue motrice (9) dans le trajet (10b) en aval de l'embrayage centrifuge conformément à un paramètre physique concernant la rotation du trajet (10a) en amont de l'embrayage centrifuge, au moins lorsque l'embrayage centrifuge (300) est dans un état de demi-embrayage, et

au moins lorsque l'embrayage centrifuge (300) est dans un état de demi-embrayage, une vitesse de rotation de la source d'entraînement (10) est changé de manière à s'approcher d'une vitesse de rotation cible en utilisant le paramètre physique concernant la rotation du trajet (10a) en amont de l'embrayage centrifuge.

2. Système de commande de force motrice selon la revendication 1, où, lorsque l'embrayage centrifuge (300) est dans un état d'embrayage, la force motrice de la roue motrice (9) dans le trajet (10b) en aval de l'embrayage centrifuge est commandée en se fondant sur un paramètre physique concernant la rotation dans le trajet (10b) en aval de l'embrayage centrifuge et un paramètre physique concernant la rotation d'une roue non motrice du véhicule.

3. Système de commande de force motrice selon la revendication 1 ou 2, où un état de l'embrayage centrifuge (300) est déterminé en se fondant sur un rapport entre : au moins un des paramètres que sont un paramètre physique concernant la rotation dans le trajet (10b) en aval de l'embrayage centrifuge et un paramètre physique concernant la rotation d'une roue non motrice (7) du véhicule ; et le paramètre physique concernant la rotation dans le trajet (10a) en amont de l'embrayage centrifuge.

4. Système de commande de force motrice selon la revendication 3, où un état de l'embrayage centrifuge (300) est déterminé en se fondant sur un rapport entre le paramètre physique concernant la rotation dans le trajet (10a) en amont de l'embrayage centrifuge et le paramètre physique concernant la rotation dans le trajet (10b) en aval de l'embrayage centrifuge lorsque la transmission (200) du véhicule présente un rapport de transmission maximal.

5. Système de commande de force motrice selon la revendication 4, où le rapport entre le paramètre physique concernant la rotation dans le trajet (10a) en amont de l'embrayage centrifuge et le paramètre physique concernant la rotation dans le trajet (10b) en aval de l'embrayage centrifuge, lorsque la transmission (200) du véhicule présente un rapport de transmission maximal, est réglé en estimant un état de la transmission (200) après que le véhicule a parcouru une distance prédéterminée.

6. Système de commande de force motrice selon l'une quelconque des revendications 1 à 5, où, au moins lorsque l'embrayage centrifuge (300) est dans un état de demi-embrayage, une vitesse de rotation de la source d'entraînement (10) est changée conformément au paramètre physique concernant la rotation dans le trajet (10a) en amont de l'embrayage centrifuge.

7. Système de commande de force motrice selon l'une quelconque des revendications 1 à 6, où, lorsque l'embrayage centrifuge (300) est dans un état d'embrayage, une puissance de sortie de la source d'entraînement (10) est changée en se fondant sur un paramètre physique concernant la rotation dans le trajet (10b) en aval de l'embrayage centrifuge et un paramètre physique concernant la rotation d'une roue non motrice (7) du véhicule.

8. Système de commande de force motrice selon l'une quelconque des revendications 1 à 7, où
le système de commande de force motrice est un système d'ajustement d'un patinage de la roue motrice (9) lorsque la roue motrice (9) patine ; et

la vitesse de rotation cible est une vitesse de rotation à laquelle la roue motrice (9) atteint un patinage prédéterminé.

9. Système de commande de force motrice selon l'une quelconque des revendications 1 à 8, où,
le système de commande de force motrice est un système d'ajustement d'un patinage de la roue motrice (9) lorsque la roue motrice (9) patine ; et
la vitesse de rotation cible est une vitesse de rotation à laquelle la roue motrice (9) atteint l'adhérence.

10. Système de commande de force motrice selon l'une quelconque des revendications 1 à 9, où la vitesse de rotation cible est réglée en se fondant sur des grandeurs relatives d'un paramètre physique concernant la rotation dans le trajet (10b) en aval de l'embrayage centrifuge et un paramètre physique concernant la rotation d'une roue non motrice (7) du véhicule.

11. Système de commande de force motrice selon l'une quelconque des revendications 1 à 9, où
le système de commande de force motrice est un système pour ajuster un patinage de la roue motrice (9) lorsque la roue motrice (9) patine ; et
la vitesse de rotation cible est réglée en se fondant sur un rapport entre le paramètre physique concernant la rotation dans le trajet (10a) en amont de l'embrayage centrifuge et une quantité de changement du patinage de la roue motrice (9).

12. Système de commande de force motrice selon l'une quelconque des revendications 1 à 9, où la vitesse de rotation cible est réglée en se fondant sur un rapport entre le paramètre physique concernant la rotation dans le trajet (10a) en amont de l'embrayage centrifuge et une quantité de changement d'un paramètre physique concernant la rotation dans le trajet (10b) en aval de l'embrayage centrifuge.

13. Système de commande de force motrice selon la revendication 11 ou 12, où la vitesse de rotation cible est réglée en se fondant sur un couple excédentaire.

14. Système de commande de force motrice selon l'une quelconque des revendications 1 à 13, où
le système de commande de force motrice est un système pour ajuster un patinage de la roue motrice (9) lorsque la roue motrice (9) patine ; et
lorsque l'embrayage centrifuge (300) est dans un état d'embrayage, une puissance de sortie de la source d'entraînement (10) est changée de telle manière que le patinage de la roue motrice (9) devient égal ou inférieur à un patinage cible, en se fondant sur un paramètre physique concernant la rotation dans le trajet (10b) en aval de l'embrayage centrifuge et un paramètre physique concernant la rotation d'une roue non motrice (7) du véhicule.

15. Véhicule comportant le système de commande de force motrice selon l'une quelconque des revendications 1 à 14.

*FIG.1*

*FIG.2*

*FIG.3*

*FIG.4*

*FIG.5*

## FIG.6

## FIG.7

CENTRIFUGAL FORCE

CENTRIFUGAL FORCE

CENTRIFUGAL FORCE

*FIG.8*

*FIG.9*

*FIG.10*

*FIG.11*

*FIG.12*

ENGINE ROTATIONAL SPEED

DRIVING WHEEL ROTATIONAL SPEED

L_LOW

C13

C17

C12

C16

R_in

C15

C14

C11    C18

0

*FIG.13*

(a)

(b)

(c)

(d)

C11  C12  C13  C14  C15  C16  C17  C18

*FIG.14*

## FIG.15

*FIG.16*

*FIG.17*

## FIG.18

(a)

(b)

(c)

(d)

C21  C22  C24  
C23  C25  C26

## FIG.19

SECONDARY SHEAVE/CLUTCH OUTER COVER ROTATIONAL SPEED

## FIG.20

(a)

(b)

(c)

C31　C33

C32

C34

*FIG.21*

*FIG.22*

PRIMARY SHEAVE ROTATIONAL SPEED

L_LOW

R_in

L_TOP

0

SECONDARY SHEAVE/CLUTCH OUTER COVER ROTATIONAL SPEED

*FIG.23*

FIG.24

## FIG.25

*FIG.26*

(a)

(b)

(c)

(d)

1

0

$C_{h1}$ $C_{h2}$

*FIG.27*

ENGINE ROTATIONAL SPEED

NON-DRIVING WHEEL ROTATIONAL SPEED

*FIG.28*

*FIG.29*

## FIG.30

(a)

(b)

(c)

(d)

C41 C42
C43
C44
C45
C46

FIG.31

## FIG.32

CLUTCH TORQUE CAPACITY

T1

T2

T3

R3  R1  SECONDARY SHEAVE ROTATIONAL SPEED

## FIG.33

ESTIMATED OPTIMUM TORQUE VALUE

TARGET SLIP AMOUNT

PROPORTIONAL COMPONENT

INTEGRAL COMPONENT

DIFFERENTIAL COMPONENT

TARGET TORQUE

SLIP AMOUNT

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4143426 A
- US 8543301 B

- JP 2006071096 A